(19) Europäisches Patentamt / European Patent Office / Office européen des brevets

(11) **EP 3 698 422 B1**

(12) **EUROPEAN PATENT SPECIFICATION**

(45) Date of publication and mention
of the grant of the patent:
**06.03.2024 Bulletin 2024/10**

(21) Application number: **18795775.8**

(22) Date of filing: **19.10.2018**

(51) International Patent Classification (IPC):
*H01M 4/86* (2006.01)        *H01M 4/90* (2006.01)

(52) Cooperative Patent Classification (CPC):
**H01M 4/8605; H01M 4/9008;** Y02E 60/50

(86) International application number:
**PCT/GB2018/053034**

(87) International publication number:
**WO 2019/077367 (25.04.2019 Gazette 2019/17)**

(54) **PARTICLES AND THEIR METHOD OF PRODUCTION AND USES**

PARTIKEL UND VERFAHREN ZU IHRER HERSTELLUNG UND VERWENDUNGEN

PARTICULES ET LEUR MÉTHODE POUR LA PRODUCTION ET LES UTILISATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.10.2017 GB 201717206**

(43) Date of publication of application:
**26.08.2020 Bulletin 2020/35**

(73) Proprietor: **Oxford University Innovation Limited
Botley, Oxford OX2 0JB (GB)**

(72) Inventors:
• **COMPTON, Richard Guy**
  **Oxford OZ1 3QZ (GB)**
• **YANG, Haiying**
  **Oxford OX1 3QZ (GB)**
• **LI, Xiuting**
  **Oxford OX1 3QZ (GB)**
• **BATCHELOR-MCAULEY, Christopher**
  **Oxford OX1 3QZ (GB)**

(74) Representative: **Haseltine Lake Kempner LLP
One Portwall Square
Portwall Lane
Bristol BS1 6BH (GB)**

(56) References cited:
**WO-A2-2008/058165**

• **UDAY PRATAP AZAD ET AL: "Hydrophobicity
effects in iron polypyridyl complex
electrocatalysis within Nafion thin-film
electrodes", PHYSICAL CHEMISTRY CHEMICAL
PHYSICS, vol. 18, no. 33, 1 January 2016
(2016-01-01), pages 23365-23373, XP55526876,
ISSN: 1463-9076, DOI: 10.1039/C6CP04758K**
• **UDAY PRATAP AZAD ET AL: "Efficient sensing
of nitrite by Fe(bpy)32+ immobilized Nafion
modified electrodes", CHEMICAL
COMMUNICATIONS, vol. 46, no. 33, 1 January
2010 (2010-01-01), page 6156, XP055527243,
ISSN: 1359-7345, DOI: 10.1039/c0cc00852d**

EP 3 698 422 B1

## Description

### Background

Nation® is one of the most commonly used cation exchange polymers. The structure of Nafion is a polymer having an electrically neutral fluorocarbon backbone (polytetrafluoroethylene) and a randomly tethered side-chain with a pendant ionic group, $SO_3$. Nafion has attracted particular attention due to its attractive electrochemical and thermal properties such as proton transportation, selective ionexchange, efficient catalyst support and chemical stability. Thus, Nafion and its related multifunctional composites have gained increasing interest in the areas of sustainable energy technologies (fuel cells, batteries and solar cells) and chemical sensors. While Nafion in the form of films has been found to have many applications, it has its limitations. It would be desirable to produce Nafion in other forms, which may open up the various possible uses of the polymer. Nafion has been combined with other materials, but the resultant composite material typically comprises two distinct phases - a Nafion phase and a phase of the other material. Some prior art describes producing Nafion in various forms, and then disposing another species on its surface. However, such species may readily be dissociated from the surface of the Nafion.

### Summary of the Invention

The present invention is defined by the appended claims. In a first aspect, there is provided a doped particle, wherein the particle comprises a polymer formed from a perfluorinated monomer and a monomer having a sulfonate group ('the polymer'), wherein a dopant comprising a molecular cationic species is disposed within the polymer. In the present invention, the dopant is dispersed throughout the polymer; and at least 50% of the particles, by number, as measured by scanning electron microscopy, have an aspect ratio of 1.5 or less.

In a second aspect of the invention there is provided a method of making particles, the method comprising

a. providing a solution of a polymer formed from a perfluorinated monomer and a monomer having a sulfonate group ('the polymer') in a first liquid;
b. contacting the solution of the polymer in the first liquid with a second liquid, wherein the solubility of the polymer in the second liquid is lower than the solubility of the polymer in the first liquid, such that particles comprising the polymer precipitate. Further provided are particles producible by the method of the second aspect.

In a third aspect, there is provided a substrate having thereon or therein the doped particles according to the first aspect or particles producible according to the second aspect. The substrate may further comprise an electrically conductive material having therein or thereon the doped particles.

In a fourth aspect, there is provided an electrode having therein or thereon the doped particles according to the first aspect or particles producible according to the second aspect.

In a fifth aspect, there is provided the use of the doped particles according to the first aspect or particles producible according to the second aspect as a catalyst in a reaction.

In a sixth aspect, there is provided the use of the doped particles according to the first aspect or particles producible according to the second aspect as an electrocatalyst in an electrochemical reaction.

In a seventh aspect, there is provided the use of the doped particles according to the first aspect or particles producible according to the second aspect in an electrochemical sensor.

In an eighth aspect, there is provided the use of the doped particles according to the first aspect or particles producible according to the second aspect in a fuel cell, a battery and a solar cell.

The present inventors have found a new way of producing particles comprising a polymer formed from a perfluorinated monomer and a monomer having a sulfonate group. The method allows production of doped and undoped particles, which find many applications. Where the dopant is an electroactive species, they have been found to be useful in applications such as electrocatalysis. Furthermore, the biological compatibility of these types of polymer allow for the use in the body, e.g. to deliver a drug or a diagnostic agent. The doped particles can have the dopant within the polymer, and dispersed throughout the polymer. The present inventors have found that molecular cationic species are particularly effective as dopants, and interact well with the polymer and can be disposed within the polymeric particle, as opposed to being simply on its surface, and are therefore much less easily dissociated. The polymer and the molecular cationic species may form a homogenous phase, i.e. not two distinct phases within the particle. The particles have the advantage of having a high surface area compared to monolithic versions of the material, which can lead to increased reaction time. To the inventor's knowledge, doped particles described herein, in which molecular cationic species are disposed within the polymer, have not been produced.

## Brief Description of the Figures

Brief Description of the Figures

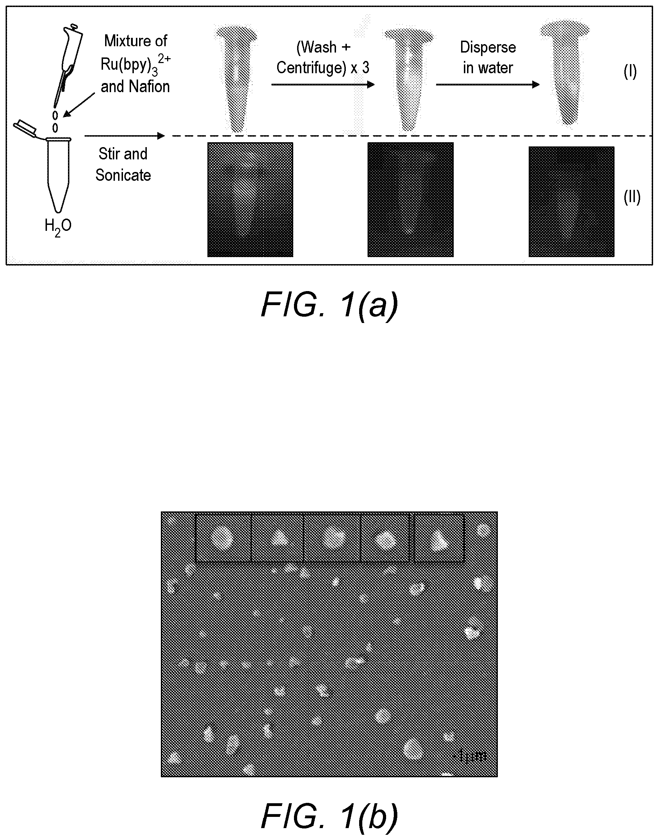

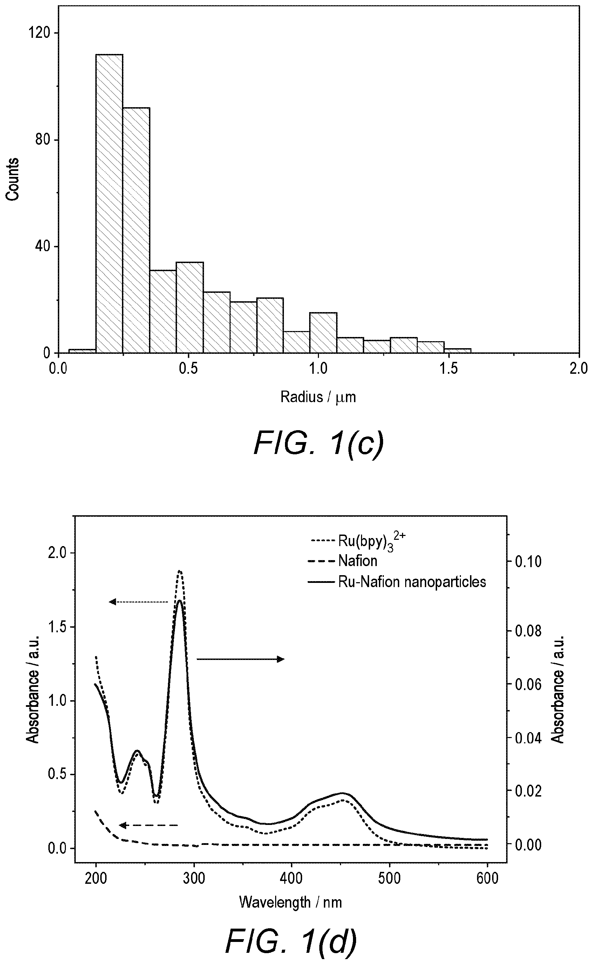

Figure 1 shows the synthesis and characterization of Nafion nanoparticles doped with $Ru(bpy)_3^{2+}$ (Ru-Nafion nanoparticles). (a) images of Ru-Nafion samples at each synthesis step (I) under white light and (II) an ultraviolet lamp with an exciting wave length of 254 nm. (b) SEM image of the Ru-Nafion nanoparticles. (c) Size distribution of 378 Ru-Nafion nanoparticles measured from SEM images. The average radius is $0.46 \pm 0.40$ $\mu$m. (d) UV-Vis spectroscopy of the Nafion solution (dashed), 1.0 mM $Ru(bpy)_3^{2+}$ aqueous solution (dot) and $2.5 \times 10^{-12}$ mol•dm$^{-3}$ Ru-Nafion nanoparticles (solid).

Figure 2 shows the dependence of peak current on the concentration of $Ru(bpy)_3^{2+}$ used for the preparation of Ru-Nafion nanoparticles. The voltammetric oxidative peak current was obtained by drop-casting $1.5 \times 10^8$ nanoparticles on a GC electrode ($d$ = 3 mm) in 10 mM PBS (pH 7.4) containing 0.1 M KCl and measured at a scan rate of 0.1V s$^{-1}$.

Figure 3 shows the voltammograms of a GC electrode ($d$ = 3 mm) in 1 mM $Ru(bpy)_3^{2+}$ solution (dashed curve), GC electrode modified with $1.5 \times 10^8$ Nafion nanoparticles (dot curve) or Ru-Nafion nanoparticles (solid curve) in 10 mM phosphate buffer (pH 7.4). Scan rate: 0.1 V s$^{-1}$. The inset showing the overlaid voltammograms of a $1.5 \times 10^8$ Ru-Nafion nanoparticles drop-casted GC electrode in 10 mM phosphate buffer containing 0.1 M KCl at varying scan rates of 0.001, 0.004, 0.008, 0.01, 0.05, 0.1, 0.2, 0.4 and 0.8 V s$^{-1}$.

Figure 4 shows the dependence of the voltammetric oxdiative peak current on the amount of Ru-Nafion nanoparticles drop-casted on a GC electrode in 10 mM PBS (pH 7.4) containing 0.1 M KCl at the scan rate of 0.1 V s$^{-1}$. The error bar was obtained from three repeats. The amount of Ru-Nafion nanoparticles ranges from $6.2 \times 10^{-18}$ mol to $5.0 \times 10^{-17}$ mol equivalent to the number of nanoparticles from $3.7 \times 10^6$ to $3.0 \times 10^7$.

Figure 5 shows oxidative peaks current versus square root of scan rates from 0.001, 0.004, 0.008, 0.01, 0.05, 0.1, 0.2, 0.4 and 0.8 V s$^{-1}$. The current were obtained by drop-casting $1.5 \times 10^8$ Ru-Nafion nanoparticles on a GC electrode in 10 mM PBS buffer (pH 7.4) with 0.1 M KCl.

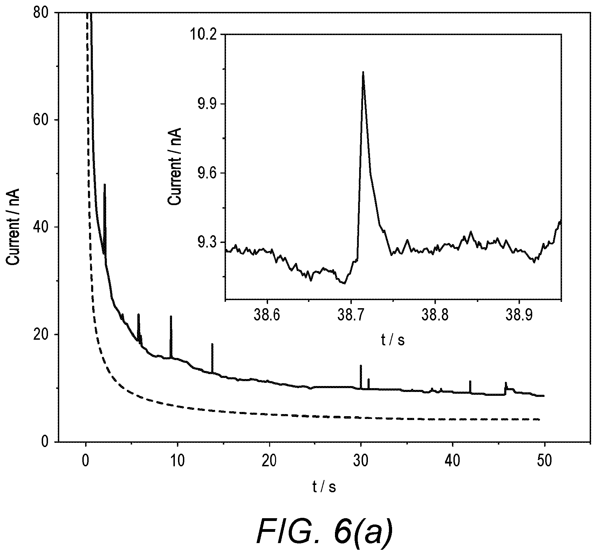

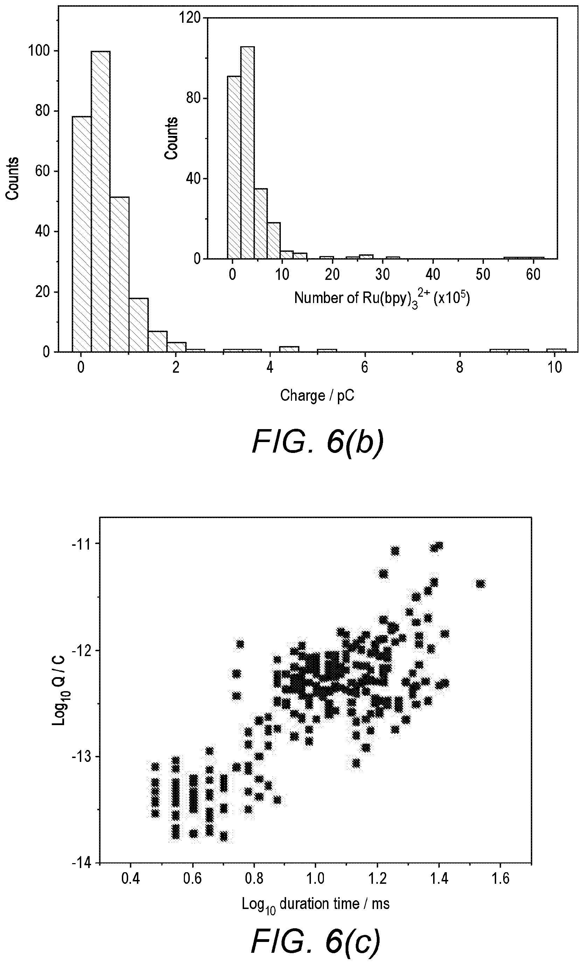

Figure 6 shows: (a) Chronoamperometric profiles showing oxidative Faradaic spikes in a Ru-Nafion nanoparticles suspension (Concentration of nanoparticles is $2.5 \times 10^{-13}$ mol•dm$^{-3}$) containing 10 mM PBS buffer (pH 7.4) and 0.1 M KCl at +1.1V (vs. SCE). The inset shows a zoom-in of same impact spikes; (b) Histogram showing the charge distribution of the 364 oxidation spikes from nano-impacts experiments at +1.1V (vs. SCE). Inset shows the histogram of the number of $Ru(bpy)_3^{2+}$ molecules incorporated in each Ru-Nafion nanoparticle. (c) Dependence of the log (base 10) of spike charge on the log (base 10) of the associate duration time of the current spikes.

Figure 7 shows the chronoamperometric profiles showing oxidative faradaic spikes of $2.5 \times 10^{-13}$ mol•dm$^{-3}$ Ru-Nafion nanoparticles in 10 mM PBS buffer (pH 7.4) containing 0.1 M KCl (a) 0.8 V, (b) 0.9 V, (c) 1.0 V, (d) 1.1 V, (c) 1.2 V and (f) 1.3 V (vs. SCE). The inset shows the detailed impact spikes.

Figure 8 shows the comparison of cyclic voltammogram of the dropcast Ru-Nafion nanoparticles (blue curve) and the spike charge of individual Ru-Nafion nanoparticles at different applied potentials (black curve).

Figure 9 shows cyclic voltammograms recorded at a GC electrode modified with $1.5 \times 10^8$ Nafion nanoparticles in 0 mM $Na_2C_2O_4$ (solid curve), 1 mM $Na_2C_2O_4$ (dashed curve), and with $1.5 \times 10^8$ Ru-Nafion nanoparticles in 1 mM $Na_2C_2O_4$ solution (dot curve) supported by 10 mM PBS (pH 7.4) containing 0.1 M KCl at a scan rate of 0.1 V s$^{-1}$.

Figure 10 shows voltammograms of a $1.5 \times 10^8$ Ru-Nafion nanoparticles modified GC electrode in 0, 1, 2, 3, 4, 5 and 6 mM $Na_2C_2O_4$ solution supported with 10 mM PBS (pH 7.4) and 0.1 M KCl at the scan rate of 0.1 V s$^{-1}$,

Figure 11 shows cyclic voltammograms recorded at a GC electrode modified with (dashed curve) and without (solid curve) $1.5 \times 10^8$ Nafion nanoparticles in 1 mM $Na_2C_2O_4$ supported by 10 mM PBS (pH 7.4) containing 0.1 M KCl at a scan rate of 0.1 V s$^{-1}$.

Figure 12 shows: (a) Chronoamperometric profiles showing the oxidative Faradaic spikes in $2.5 \times 10^{-13}$ mol•dm$^{-3}$

Ru-Nafion nanoparticles suspension containing 0, 1, 2, 3, 4, 5 and 6 mM $Na_2C_2O_4$ solution supported with 10 mM PBS buffer (pH 7.4) and 0.1 M KCl and at + 1.1 V vs. SCE; (b) Dependence of the average spike charge (dashed) and duration time (solid) on the concentration of $Na_2C_2O_4$.

Figure 13 is an illustration of the electrocatalytic oxidation of oxalate mediated by individual Ru-Nafion nanoparticle at a microelectrode.

Figure 14 shows the dependence of the spike charge on the duration time of $2.5 \times 10^{-13}$ mol·dm$^{-3}$ Ru-Nafion nanoparticles in 0, 1, 2, 3, 4, 5 and 6 mM $Na_2C_2O_4$ solution (from a to f) in 10 mM PBS (pH 7.4) containing 0.1 M KCl at + 1.1 V vs. SCE, respectively.

Figure 15 shows the UV-Vis spectroscopy of the paraquat (PQ) solutions before (dot) and after (dashed and dashed dot) incorporation into Nation, PQ-Nafion nanoparticles suspension (dashed dot dot) and non-doped Nafion (solid).

Figure 16 shows SEM images of the PQ-Nafion nanoparticles.

Figure 17 shows a histogram of 243 PQ-Nafion nanoparticles identified in SEM images. The mean particle size is found to be $0.43 \pm 0.26$ $\mu$m in radius.

Figure 18 Voltammograms of a GC electrode ($d$ = 3 mm) in 1.0 mM $PQ^{2+}$ solution (solid curve), GC electrode modified with $1.8 \times 10^8$ Nafion nanoparticles (dot curve) or PQ-Nafion nanoparticles (dashed curve) in 10 mM phosphate buffer (pH 7.4) with 0.1 M KCl at the scan rate of 0.1 V s$^{-1}$. (a) Potential scan range 0 to -1.4 V; (b) Potential scan range -0.2 to -0.9 V.

Figure 19 shows the mechanism of electrochemical reduction of paraquat.

Figure 20 shows cyclic voltammograms recorded at a GC electrode modified with a 10 $\mu$L of $3.01 \times 10^{-9}$ mol L$^{-1}$ PQ-Nafion nanoparticles (three scans) in 10 mM PBS (pH 7.4) and 0.1 M KCl. The scan rate is 0.1 V s$^{-1}$.

Figure 21 (a) The overlaid voltammograms of a $1.8 \times 10^8$ PQ-Nafion nanoparticles dropcast on a GC electrode (d = 3 mm) in 10 mM PBS with 0.1 M KCl at varying scan rates of 0.005, 0.010, 0.025, 0.050, 0.100, 0.200, 0.400 and 0.800 V s$^{-1}$. (b) The first reductive current versus square root of scan rates at the range of 0.005 to 0.800 V s$^{-1}$.

Figure 22 (a) Cyclic voltammograms of PQ-Nafion nanoparticles ensembles on GCE with various dropping amount (from inner to outside: 2.5, 5, 10, 15 and 20 $\mu$L) in 10 mM PBS (pH 7.4) with 0.1 M KCl at the scan rate of 0.1 V s$^{-1}$. (b) Dependence of the first voltammetric reduction peak current on the amount and number of layers of PQ-Nafion. The error bar was obtained from three repeats. The amount of PQ-Nafion nanoparticles ranges from $0.77 \times 10^{-16}$ mol to $6.2 \times 10^{-16}$ mol equivalent to the number of nanoparticles from $4.6 \times 10^7$ to $3.7 \times 10^8$.

Figure 23 shows chronoamperometric profiles showing reduction faradaic spikes of PQ-Nafion nanoparticles in 10 mM PBS buffer (pH 7.4) containing 0.1 M KCl. -0.8 V and -1.0 V. The inset shows the detailed impact spikes.

Figure 24 shows chronoamperometric profiles showing reduction faradaic spikes of PQ-Nafion nanoparticles in 10 mM PBS buffer (pH 7.4) containing 0.1 M KCl. -1.2 V and -1.3 V. The inset shows the detailed impact spikes.

Figure 25 Cyclic voltammograms of Nafion nanoparticles/GCE and PQ-Nafion nanoparticleslGCE ($1.8 \times 10^8$ nanoparticles) in the absence and presence of 1.0 mM $KMnO_4$ supported with 10 mM PBS (pH 7.4) and 0.1 M KCl at the scan rate of 0.1 V s$^{-1}$.

Figure 26 shows: (a) SEM image of the non-doped Nafion nanoparticles; (b) UV-Vis spectroscopy of the Nafion nanoparticles suspension.

## Detailed Description

Aspects of the present invention have been described above. Optional and preferred features are described below, and are applicable to any of the aspects
The aspects herein employ a polymer formed from a perfluorinated monomer a monomer having a sulfonate group.

The perfluorinated monomer may be a perfluorinated alkene, e.g. tetrafluoroethylene.

The monomer having a sulfonate group may be of the formula $CFR^1=CF_2$, where $R^1$ is a group of the formula $-L-SO_3M$, where L is a linker group and M is selected from H and a Group I metal, which may be selected from Li, Na, K and Rb. L may be a linker group comprising perfluorinated carbons and, optionally, oxygen atoms, which may form ether linkages between the carbon atoms. $-L-SO_3M$ may be of the formula $-O-CF_2-C(CF_3)F-O-CF_2-CF_2-SO_3M$.

Suitable examples of the polymer include those sold under the tradename Nafion by DuPont.

In an embodiment, there is provided a doped particle, wherein the particle comprises a polymer formed from a perfluorinated monomer and a monomer having a sulfonate group ('the polymer'), wherein a dopant is embedded within the polymer.

In an embodiment, the dopant is dispersed throughout the polymer. This may be achieved, for example, by the method of the second aspect. If the dispersant is dispersed throughout the polymer, this is distinguished, for example, from a particle having a core-shell structure, where the Nafion is in the core or the shell and another material is in the shell or core, respectively. Nevertheless, in some embodiments, the particle may have a core-shell structure, in which the core comprises the dopant and the shell comprises the polymer.

The doped particle may be formable by a method comprising

a. providing a solution of a polymer formed from a perfluorinated monomer and a monomer having a sulfonate group ('the polymer') in a first liquid, the solution having suspended or dissolved therein the dopant;
b. contacting the solution of the polymer in the first liquid with a second liquid, wherein the solubility of the polymer in the second liquid is lower than the solubility of the polymer in the first liquid, such that particles comprising the polymer and the dopant precipitate.

The particle may have a diameter of less than 1000 $\mu$m, optionally less than 500 $\mu$m, optionally less than 300 $\mu$m, optionally less than 100 $\mu$m, optionally less than 50 $\mu$m, optionally less than 20 $\mu$m, optionally less than 10 $\mu$m, optionally less than 5 $\mu$m, optionally less than 2 $\mu$m, optionally less than 1 $\mu$m. The particle may have a diameter of at least 0.1 $\mu$m, optionally at least 0.2 $\mu$m, optionally at least 0.3 $\mu$m. The particle may have a diameter of from 0.1 $\mu$m to 2 $\mu$m, optionally from 0.1 $\mu$m to 1.5 $\mu$m, optionally from 0.1 $\mu$m to 1 $\mu$m, optionally from 0.1 $\mu$m to 0.7 $\mu$m, optionally from 0.2 $\mu$m to 0.7 $\mu$m, optionally from 0.2 $\mu$m to 0.6 $\mu$m. The diameter of a particle may be measured by any suitable technique, such as a scanning electron microscope (SEM). The diameter may be the largest measurement across the particle.

The present invention further provides a composition comprising a plurality of the particles described herein. The mean diameter of the particles may be less than 1000 $\mu$m, optionally less than 500 $\mu$m, optionally less than 300 $\mu$m, optionally less than 100 $\mu$m, optionally less than 50 $\mu$m, optionally less than 20 $\mu$m, optionally less than 10 $\mu$m, optionally less than 5 $\mu$m, optionally less than 2 $\mu$m, optionally less than 1 $\mu$m. The mean diameter of the particles may be at least 0.1 $\mu$m, optionally at least 0.2 $\mu$m, optionally at least 0.3 $\mu$m. The mean diameter of the particles may be from 0.1 $\mu$m to 2 $\mu$m, optionally from 0.1 $\mu$m to 1.5 $\mu$m, optionally from 0.1 $\mu$m to 1 $\mu$m, optionally from 0.1 $\mu$m to 0.7 $\mu$m, optionally from 0.2 $\mu$m to 0.7 $\mu$m, optionally from 0.2 $\mu$m to 0.6 $\mu$m, optionally from 0.3 $\mu$m to 0.5 $\mu$m. The mean diameter may be measured, for example, by taking a scanning electronmicrograph of a sample from the composition, the electronmicrograph showing at least 50, optionally at least 100 particles, and then measuring the mean diameter from the sample by dividing the sum of the diameter of n particles by n, wherein n is at least 50, optionally at least 100.

The particles described herein may be substantially spherical. In an embodiment, the particles may have an aspect ratio, as measured using scanning electronmicroscope, of 1.5 or less, optionally 1.4 or less, optionally 1.3 or less. Optionally, at least 50%, by number, of the particles have an aspect ratio 1.5 or less, optionally 1.4 or less, optionally 1.3 or less. The aspect ratio may be defined at the ratio of the largest dimension of a particle, as determined by SEM, divided by the smallest dimension of the particle, determined by SEM. It has been found that the method of producing the particles produces substantially spherical particles. This is a surprise, since particles comprising Nafion in the prior art have been found to have rod-like structures.

The dopant may comprise a molecular cationic species. A molecular cationic species may be defined as a species in cationic form that comprises a covalently bonded moiety. A molecular cationic species would typically exclude a cation that is a metal ion, e.g. an iron cation, in an inorganic salt, such as $Fe_2O_3$ The covalently bonded moiety may be an organic species, i.e. a species containing carbon, which is covalently bonded to at least one other atom. The covalently bonded moiety may be an organic cation, i.e. a cation containing carbon, which is covalently bonded to at least one other atom, and optionally the charge is borne by a non-metal atom in the organic cation, e.g. carbon or nitrogen. The molecular cationic species may comprise a metal complex, i.e. a cationic moiety comprising a metal coordinated to one or more ligands.

The dopant may be an electroactive species. In an embodiment, the dopant is an electrocatalytic species, which may be a species capable of acting as an electrocatalyst in the absence of the polymer. In an embodiment, the dopant has two oxidation states: an oxidised state and a reduced state, and the standard electrode potential (in all cases relative to the SCE) for reducing the oxidised state to the reduced state is from -2V to 2V, vs SCE. in an embodiment, the standard electrode potential for reducing the oxidised state to the reduced state is from -2V to 0V, optionally from -1.8 V to 0 V, optionally from -1.6 V to 0 V, optionally from -1.5 V to 0 V, optionally from -1.8 V to -0.1 V, optionally from -1.8 V to -0.2 V, optionally from -1.8 V to -0.4 V, optionally from -1.8 V to -0.5 V, optionally from -1.8 V to - 0.6 V, optionally from -1.6 V to - 0.8 V, optionally from -1.4 V to - 0.6 V. In an embodiment, the standard electrode potential for reducing the oxidised state to the reduced state is from 0 V to 2V, optionally from 0 V to 1.8 V, optionally from 0 V to 1.6 V, optionally from to 0 V to 1.5 V, optionally from 0.1 V to 1.8 V , optionally from 0.2 V to 1.8 V, optionally from 0.5 V to 1.8 V, optionally from 0.8 V to 1.8 V to, optionally from 0.8 V to 1.6 V. In an embodiment, the standard electrode potential for reducing the oxidised state to the reduced state is from -1V to 1V, vs SCE. In an embodiment, the standard electrode potential for reducing the oxidised state to the reduced state is from -1V to 0. In an embodiment, the standard electrode potential for reducing the oxidised state to the reduced state is from 0 to -1V. All potentials mentioned herein, unless otherwise stated, are vs SCE.

In an embodiment, the dopant comprises a species selected from a metal complex, an organometallic species and an organic cation. The metal complex is positively charged. In an embodiment, the metal complex comprises a species comprising a metal ion and one or a plurality of ligands, coordinated to the metal ion, and the metal complex bears a positive charge of at least 1, optionally at least 2. For example, in the $M(L)_n$ species mentioned below, the $M(L)_n$ species may bear a charge of at least +1, optionally at least +2. A metal complex may be defined as a moiety comprising a metal, which is coordinated to a ligand by a heteroatom, i.e. a non-carbon atom, such as oxygen or nitrogen.

The metal complex may comprise the metal and one or a plurality of ligands, and optionally the one or plurality of ligands comprise a ligand containing one or more aryl or heteroaryl groups, optionally wherein the metal complex comprises a species of the formula $[M(L)_n]^{m+}$, wherein M is a metal, L is a ligand (and optionally, where n is greater than 1, a plurality of different ligands may be present, i.e. $(L)_n$ does not necessarily denote n ligands of the same type in the complex, simply that there is more than one ligand), optionally a species comprising one or more heterocycles, e.g. one or more heteroaryl groups, and n is an integer from 1 to 6, 2, 3, 4 or 5, and n is an integer of at least 1, optionally at least 2, optionally at least 3, optionally 1 to 3, optionally 1, 2 or 3. M may be selected from any of Group of the Period table, e.g. selected from Group 1, 2, 3, 4, 5, 6, 7, 8, 9, 10, 11, 12 and 13 of the Periodic Table. The one or more heterocycles or heteroaryl groups may be or comprise one or more nitrogen-containing heteroaryl groups and/or may be selected from 5-or 6-membered heteroaryl groups, optionally selected from pyridine and pyrrole. M may be selected from any transition metal, including, but not limited to Sc, Ti, V, Cr, Mn, Fe, Co, Ni, Cu, Zn, Y, Zr, Nb, Mo, Tc, Ru, Rh, Pd, Ag, Cd, La, Hf, Ta, W, Re, Os, Ir, Pt, Au and Hg. In an embodiment, M may be selected from group 8 or 9 of the periodic table, optionally wherein M is Co or Ru and wherein the one or more heterocycles are selected from pyridine and pyrrole and optionally wherein the heterocycle is a polyheterocycle. In an embodiment, L may be an optionally substituted bipyridinium compound, optionally an optionally substituted 2,2'-bipyridinium compound, optionally 2,2'-bipyridine (also termed bpy). Optionally $M(L)_n$ is $M(bpy)_3$. Optionally $[M(L)_n]^{m+}$ is $Ru(bpy)_3^{2+}$. M may be a metal in an oxidation state of (I), (II) or (III). Since $M(L)_n$ is a charged species, then counterions such as halide counterions may be present, and e.g. the halide ions may be selected from fluoride, chloride, bromide and iodide.

As indicated, the molecular cationic species may be defined as a species in cationic form that comprises a covalently bonded moiety. The covalently bonded moiety may be an organic species, i.e. a species containing carbon, which is covalently bonded to at least one other atom. The covalently bonded moiety may be an organic cation, i.e. a cation containing carbon, which is covalently bonded to at least one other atom, and optionally the charge is borne by a non-metal atom in the organic cation, e.g. carbon or nitrogen. The organic cation may lack a metal ion. Optionally, the organic cation is a heterocyclic cation, i.e. a cation comprising a heterocyclic ring, optionally a poly heterocyclic cation, i.e. a cation comprising a plurality of heterocyclic rings, and optionally one or more atoms of the heterocyclic ring or rings, or groups directly or indirectly covalently bonded to the heterocyclic ring or rings, bears a positive charge. Optionally, the dopant comprises the organic cation and one or more counterions. Optionally, the organic cation comprises a heteroaryl cation and optionally one or more counterions are associated with the cation. Optionally, the organic cation is a heteroaryl cation, optionally comprising a plurality of heteroaryl rings. Optionally, the organic cation comprises one or more nitrogen-containing heteroaryl groups, which may be 5- or 6-membered heterocyclic rings, optionally selected from pyridine and pyrrole. The organic cation, which may be a heterocyclic cation, may have a plurality of oxidation states, and optionally the organic cation bears a charge of at least +1, optionally at least +2. Optionally, one or more counterions such as halide counterions may be present with the organic cation, and e.g. the halide ions may be selected from fluoride, chloride, bromide and iodide. Optionally, the organic cation comprises an optionally substituted bipyridinium compound, optionally an optionally substituted 4,4'-bipyridinium compound, optionally an alkyl substituted 4,4'-bipyridinium compound, optionally a 1',1-dialkyl substituted 4,4'-bipyridinium compound, optionally an 1',1-di$C_{1-C10}$alkyl substituted 4,4'-bipyridinium compound, optionally a 1, 1'- dimethyl-4, 4'-bipyridinium. The 1, 1'- dimethyl-4, 4'- bipyridinium species may be present in cationic form, with a positive charge of 2+ (which may be termed $MV^{2+}$) or in radical cation form, with a positive charge of 1+ (which may be termed $M^{V+}$). Optionally, the dopant comprises 1, 1'- dimethyl-4, 4'-bipyridinium dichloride, which is sometimes termed paraquat dichloride.

As indicated, the molecular cationic species may be defined as a species in cationic form that comprises a covalently bonded moiety. The molecular cationic species may comprise an organometallic cation. An organometallic cation may be defined as a moiety bearing a positive charge, and wherein there is a bond between a metal and a carbon within the moiety. The metal of the organometallic cation may be selected from any of Group of the Period table, e.g. selected from Group 1, 2, 3, 4, 5, 6, 7, 8, 9, 10, 11, 12 and 13 of the Periodic Table. The organometallic cation may comprise one or more aryl moieties, such as a cyclopentadienyl ring. The organometallic cation may comprise one or more alkene or alkyne moieties, optionally wherein the double bond of the alkene or triple bond of the alkyne is coordinated to the metal. The organometallic cation may comprise one or more heterocycles, which may be aromatic heterocycles (i.e. heteroaryl groups). The one or more heterocycles may be or comprise one or more nitrogen-containing heteroaryl groups and/or may be selected from 5-or 6-membered heteroaryl groups, optionally selected from pyridine and pyrrole. M may be selected from any transition metal, including, but not limited to Sc, Ti, V, Cr, Mn, Fe, Co, Ni, Cu, Zn, Y, Zr, Nb, Mo, Tc, Ru, Rh, Pd, Ag, Cd, La, Hf, Ta, W, Re, Os, Ir, Pt, Au and Hg. Cationic organometallic cations include, but are not limited to, ferrocenium ($[Fe(C_5H_5)_2]$)$^+$ and cobaltocenium ($[Co(C_5H_5)_2]^+$. The organometallic cation may be a metal complex having a metal-carbon bond, e.g. $[(C6H6)Ru(H2O)_3]^{2+}$. Optionally one or more counterions may be present with the organometallic cation, e.g. a hexafluorophosphate anion.

If a species is substituted, the substituent may be selected from optionally substituted phenyl, aryl, heteroaryl, arylalkyl, alkylaryl, heteroarylalkyl, alkylheteroaryl, alkoxy, aryloxy, arylalkoxy, acyl, aroyl, nitro, cyano, carboxy, alkoxycarbonyl, aryloxycarbonyl, arylalkoxycarbonyl, alkylsulfonyl, arylsulfonyl, heteroarylsulfonyl, hydroxyl, halo, amino alkyl or dialkyl-amino, and a thio-containing group, such as thiol and a thioether.

In an embodiment, the dopant is present, such that the number of cations of the molecular cationic species per gram of the polymer is in the range of from $1 \times 10^5$ to $1 \times 10^{21}$, optionally $1 \times 10^{10}$ to $1 \times 10^{21}$, optionally $1 \times 10^{15}$ to $1 \times 10^{21}$, optionally $1 \times 10^{16}$ to $1 \times 10^{21}$, optionally $1 \times 10^{17}$ to $1 \times 10^{21}$, optionally $1 \times 10^{18}$ to $1 \times 10^{21}$, optionally $1 \times 10^{18}$ to $1 \times 10^{20}$. The number of cations of the molecular cationic species per gram may be determined using any suitable method, e.g. in a method as described in the Examples herein, and, for any species other than the species used in the Examples, with the method being applied in an analogous way, e.g. using UV Vis analysis or nano-impact analysis.

In an embodiment, the dopant is present, such that the number of cations of the molecular cationic species per particle is in the range of from $1 \times 10^3$ to $1 \times 10^{10}$, optionally $1 \times 10^3$ to $1 \times 10^8$, optionally $1 \times 10^4$ to $1 \times 10^8$, optionally $1 \times 10^4$ to $1 \times 10^7$, optionally $1 \times 10^5$ to $1 \times 10^8$, optionally $1 \times 10^5$ to $1 \times 10^7$. The number of cations of the molecular cationic species per particle may be determined using any suitable method, e.g. in a method as described in the Examples herein, and, for any species other than the species used in the Examples, with the method being applied in an analogous way, way, e.g. using UV Vis analysis or nano-impact analysis.

The dopant may be an active agent, e.g. a biologically active agent, e.g. an active agent selected from a drug, a drug precursor and a diagnostic, e.g. fluorescent labelling, species. The active agent may be selected from pharmaceutical and/or cosmetic active agents, which may be selected from growth factors; growth factor receptors; transcriptional activators; translational promoters; antiproliferative agents; growth hormones; anti-rejection drugs; anti-thrombotic agents; anti-coagulants; stem cell or gene therapies; antioxidants; free radical scavengers; nutrients; co-enzymes; ligands; cell adhesion peptides; peptides; proteins; nucleic acids; DNA; RNA; sugars; saccharides; nutrients; hormones; antibodies; immunomodulating agents; growth factor inhibitors; growth factor receptor antagonists; transcriptional repressors; translational repressors; replication inhibitors; inhibitory antibodies; cytotoxin; hormonal agonists; hormonal antagonists; inhibitors of hormone biosynthesis and processing; antigestagens; antiandrogens; antiinflammatory agents; non-steroidal antiinflammatory agents (NSAIDs); analgesics; COX-I and II inhibitors; antimicrobial agents; antiviral agents; antifungal agents; antibiotics; anti-proliferative agents; antineoplastic/antiproliferative/anti-miotic agents; anesthetic, analgesic or pain-killing agents; antipyretic agents, prostaglandin inhibitors; platelet inhibitors; DNA de-methylating agents; cholesterol-lowering agents; vasodilating agents; endogenous vasoactive interference agents; angiogenic substances; cardiac failure active ingredients; polysaccharides; sugars; targeting toxin agents; and combinations thereof.

The dopant may comprise a diagnostic agent. The diagnostic agent in the body may be an agent suitable for use in a technique selected from, but not limited to, diagnostic medical imaging procedures (for example, radiographic imaging (x-ray), fluorescence spectroscopy, Forster/fluorescent resonance energy-transfer (FRET), computed tomography (CT scan), magnetic resonance imaging (MRI), positron emission tomography (PET), other nuclear imaging, and the like. The diagnostic agent may be an agent for use in diagnostic imaging, for example a contrast agents, such as barium sulfate for use with MRI, for example, or fluorescein isothiocyanate (FITC).

Optionally, the particle comprises a dopant selected from a diagnostic agent and a therapeutic agent, and optionally both a diagnostic agent and a therapeutic agent. The diagnostic agent may be selected from, for example, contrast agents, e.g. contrast agents for use in MRI techniques, and luminescent agents, e.g. fluorescent agents. The therapeutic agent may be a drug for the treatment or prevention of a disease.

**The method**

In a second aspect there is provided a method of making particles, the method comprising

> a. providing a solution of a polymer formed from a perfluorinated monomer and a monomer having a sulfonate group ('the polymer') in a first liquid which may have been pre-concentrated;
> b. contacting the solution of the polymer in the first liquid with a second liquid, wherein the solubility of the polymer in the second liquid is lower than the solubility of the polymer in the first liquid, such that particles comprising the polymer precipitate.

The solution of a polymer may be a true solution or may be a colloidal suspension of particles, which may be invisible to the naked eye. The first liquid may be selected from a non-aqueous solvent, which may be a protic or non-protic solvent. The first liquid may be selected from a non-aqueous solvent, which has a dielectric constant of 50 or less, optionally a dielectric constant of from 25 to 50. The first liquid may be selected from an alkanol, dimethyl sulfoxide (DMSO), and dimethyl formamide (DMF), dimethylacetamide, acetone, acetonitrile, glycerin, N-methyl-2-pyrrolidinone, nitromethane. In an embodiment, the first liquid comprises an alkanol, which may be selected from a C1 to C10 alkanol, optionally a C1 to C5 alkanol, which may be selected from methanol, ethanol, propanol (including n-propanol and i-propanol), butanol (including n-butanol, i-butanol, and t-butanol) and pentanol. The first liquid may comprise a mixture of an alkanol and water, e.g. where water constitutes from 5wt% to 50wt% of the first liquid, the remaining wt% being the alkanol. The C1 to C10 alkanol may be a diol, such as ethylene glycol and diethylene glycol. Solutions of the polymer are commercially available, e.g. from Sigma Aldrich.
The solution of the polymer may contain from 0.5wt% polymer to 50 wt% polymer, optionally from 1 wt% to 30 wt% polymer, optionally from 2 wt% to 20 wt% polymer, optionally from 2wt% to 15wt% polymer, optionally from 5 wt% to 15 wt% polymer, optionally from 10 wt% to 14 wt% polymer, optionally from 2wt% to 8 wt% polymer.
The second liquid may be more polar (e.g. have a higher dielectric constant) than the first liquid. The second liquid may have a dielectric constant of at least 50, optionally at least 60. The second liquid may consist essentially of or consist of water. "Consist essentially of" may indicated that the liquid contains less than 10wt% of other solvents, such as alkanols, e.g. less than 5wt%, e.g. less than 1wt% of other solvents, such as alkanols.
The contacting of the solution of the polymer in the first liquid with a second liquid may involve mixing the first liquid and the second liquid, e.g. by agitation such as stirring or shaking. The stirring may involve, for example, stirring with an impeller at a rotational rate of at least 100 rpm, optionally at least 200 rpm, optionally at least 300 rpm, optionally at least 400 rpm, optionally at least 500 rpm. The stirring may involve, for example, stirring with an impeller at a rotational rate of from 100 rpm to 1000 rpm, optionally from 200 rpm to 800 rpm, optionally from 300 rpm to 800 rpm, optionally from 400 rpm to 800 rpm, optionally from 500 rpm to 700 rpm.
The agitation of mixture of the first and second liquids may carried out until the particles comprising the polymer have finished precipitating. The precipitation may be observed, for example, by a colour change in the liquid and and/or an increase in opaqueness in the liquid, and the agitation stopped once there is no further colour change or increase in opaqueness.
The agitation of mixture may carried out for a period of at least 30 seconds, optionally at least 1 minute, optionally at least 2 minutes, optionally at least 3 minutes, optionally at least 4 minutes. The agitation of mixture, e.g. when the rate of rotation during stirring is high (e.g. at 500 rpm or above), may carried out for a period of from 30 seconds to 30 minutes, optionally from 1 minute to 10 minutes, optionally from 2 minutes to 7 minutes.
Following the contacting, the mixture of the first and second liquids may be subjected to a sonication technique, which may be for a period of at least 1 minute, optionally at least 5 minutes, optionally at least 15 minutes, optionally at least 20 minutes, optionally at least 25 minutes. Following the contacting, the mixture of the first and second liquids may be subjected to a sonication technique, which may be for a period of from 1 minute to 1 hour, optionally from 5 minutes to 1 hour, optionally from 15 minutes to 45 minutes, optionally from 20 minutes to 40 minutes, optionally about 30 minutes.
The precipitated particles comprising the polymer may be concentrated and optionally separated from the first and second liquids using a suitable technique, such as centrifuging the mixture of the first and second liquids and then removing the precipitated particles. The centrifuging the mixture of the first and second liquids may involve rotating the mixture in a vessel at a rotational speed of at least 1000 rpm, optionally at least 5000 rpm, optionally at least 7000 rpm, optionally at least 10,000 rpm, for a suitable period, e.g. at least 1 minute, optionally at least 5 minutes, optionally at least 7 minutes, optionally at least 10 minutes. The precipitated particles may be dried (i.e. removing any residual first and second liquid) by allowing the first and second liquid to evaporate, which may involve placing the particles in a vacuum.
In an embodiment, the solution of the polymer in a first liquid or the second liquid further comprises a dopant, such that, in step (b), the particles comprising the polymer and the dopant precipitate. The dopant may be dissolved or suspended in the first and/or second liquid. The dopant may be as described herein. The present invention further provides a particle, which may be a doped particle, producible by the method described herein. In an embodiment, the dopant comprises a molecular cationic species.

Also provided herein is a substrate having thereon or therein the doped particles according to the first aspect or particles producible according to the second aspect. The substrate may further comprise an electrically conductive material having therein or thereon the doped particles according to the first aspect or particles producible according to the second aspect. The substrate may be suitable for use as an electrode. The substrate used may comprise an electrically conductive or semi-conductive substance. The electrically conductive substance may comprise a metal or carbon. The electrically conductive substance may comprise a metal selected from gold, silver and platinum. In an embodiment, the electrically conductive substance comprises indium tin oxide. In an embodiment, the electrically conductive substance comprises a conductive polymer. The electrically conductive substance may comprise a carbon-containing material, which may be selected from glassy carbon, edge plane pyrolytic graphite, basal plane pyrolytic graphite, boron doped diamond, highly ordered pyrolytic graphite, carbon powder and carbon nanotubes. In a preferred embodiment, the substrate (used in step (a) of the method) comprises a glassy carbon material. The doped particles according to the first aspect or particles producible according to the second aspect may be present on a surface of the substrate, and/or incorporated into the material of the substrate. The doped particles may be immobilised on a surface of the substrate, e.g. by a technique such as dropcasting the particles on the substrate.

In a fourth aspect, there is provided an electrode having therein or thereon the doped particles according to the first aspect or particles producible according to the second aspect.

In a fifth aspect, there is provided the use of the doped particles according to the first aspect or particles producible according to the second aspect as a catalyst in a reaction.

In a sixth aspect, there is provided the use of the doped particles according to the first aspect or particles producible according to the second aspect as an electrocatalyst in an electrochemical reaction. The electrochemical reaction may involve the oxidation or reduction of a reactant species. The reactant species may be an organic compound, and the reaction may be the oxidation or reduction of a substituent group, such as a substituent group selected from a hydroxyl group, a ketone or aldehyde group, a carboxy group. The reactant species may be a species having a C=O group, and the electrochemical reaction may involve the oxidation or reduction of the C=O group. In an embodiment, the reactant species is oxalate and the electrochemical reaction comprises the oxidation of the oxalate. The electrochemical reaction may be an $H_2$ oxidation reaction. The electrochemical reaction may be an $O_2$ reduction reaction. In an embodiment, the reactant species is an inorganic species. The inorganic species may, for example, comprise permanganate. The electrochemical reaction may be the reaction in a fuel cell (e.g. the formation of hydrogen gas from the reduction of hydrogen ions and/or the formation of oxygen gas from the oxide species). The electrochemical reaction may involve the reduction of carbon dioxide to one or more organic compounds (e.g. a compound selected from methane, formate, ethylene, ethanol, n-propanol, and allyl alcohol). The electrochemical reaction may be carried out using any suitable technique and apparatus. In an embodiment, a potentiostat is used. In an embodiment, voltammetry may be used, e.g. cyclic voltammetry, and this may be used to monitor the reaction.

In a seventh aspect, there is provided the use of the doped particles according to the first aspect or particles producible according to the second aspect in an electrochemical sensor.

In an eighth aspect, there is provided the use of the doped particles according to the first aspect or particles producible according to the second aspect in a fuel cell, a battery and a solar cell. The doped particles according to the first aspect or particles producible according to the second aspect may be present on or in at least one electrode of the fuel cell, battery and solar cell.

The doped particles according to the first aspect or particles producible according to the second aspect may also be used as a catalyst support. Accordingly, the present invention provides a composition comprising doped particles according to the first aspect or particles producible according to the second aspect and a further species, which may be a catalyst and in particulate form. The further species may, for example, comprise a Noble metal, e.g. platinum, and/or carbon. The Noble metal may be as described herein.

In an embodiment, the doped particles according to the first aspect or particles producible according to the second aspect may be in a porous substrate.

## Examples

### Reagents

Nation® perfluorinated resin solution was supplied by Aldrich (5 wt. % in lower aliphatic alcohol and water (45%)). Tris(2,2'-bipyridyl) ruthenium (II) chloride hexahydrate ($Ru(bpy)_3Cl_2 \cdot 6H_2O$) and sodium oxalate ($Na_2C_2O_4$) were purchased from Aldrich and used as received. The phosphate buffer solution (pH = 7.4) was composed of 10 mM each of monobasic and dibasic potassium phosphate, together with 0.1 M KCl. All solutions were made using ultrapure water of resistivity 18.2 MΩ cm (Millipore) at 25 °C and degassed thoroughly with $N_2$ (oxygen-free, BOC Gases pic) before use. Paraquat (N, N'-dimethyl-4,4'-bipyridinium dichloride, $PQ^{2+} \cdot Cl_2$) and $KMnO_4$ (≥ 99%) were purchased from Aldrich.

Apparatus

The size of the Ru-Nafion nanoparticles was characterized by scanning electron microscopy (SEM). A JEOL JSM-6500F scanning microscope (JEOL, GmbH, Eching b. Muchen, Germany) was used and an accelerating voltage of 5 kV was applied. SEM was conducted on a dropcast of the nanoparticles onto a glassy carbon substrate. Characterization of the Nation nanoparticle suspensions with and without encapsulated $Ru(bpy)_3^{2+}$ were further performed by UV-Vis spectroscopy (U-2001, Hitachi, Mannheim, Germany). For all such measurements a quartz cell with a 0.1 cm optical path was used.

A μAutolab II (Metrohm-Autolab BV, Utrecht, The Netherlands) was used to control the electrochemical experiments using NOVA 1.10 software. All electrochemistry experiments were performed in a Faraday cage with a three-electrode system at 298 K. For cyclic voltammetry experiments, a glassy carbon (GC) electrode (CH instruments, Austin, USA) of 3.0 mm diameter was used as the working electrode, with a saturated calomel electrode (SCE, ALS distributed by BASi, Tokyo, Japan) as the reference electrode and a platinum foil (99.99% GoodFellow, Cambridge, U.K.) as the counter electrode. The GC electrode was polished with aqueous slurries of 1, 0.3 and 0.05 μm alumina for 3 to 5 min each in descending order of size. Alumina residue was removed from the electrode by rinsing with plenty of water and the electrode was dried with nitrogen. The clean GC electrode was then dropcast with varying amounts of the Ru-Nafion nanoparticle suspension and dried under an nitrogen atmosphere. The solution of 10 mM PBS (pH 7.4) with 0.10 M KCl was degassed thoroughly with nitrogen before scanning and an atmosphere of nitrogen was maintained during the experiments. Cyclic voltammetry was conducted after the insertion of the modified GC electrode into the degassed solution. For the oxalate experiments, a known concentration of sodium oxalate solution was added in the degassed buffer solution before the same modified GC electrode was voltammetrically scanned.

The nano-impact experiments were also conducted by using the μAutolab II (Metrohm Autolab BV, Utrecht, The Netherlands) in a Faraday cage with a three-electrode system at 298 K. A carbon microwire electrode (ca. 7 μm in diameter and ca. 1 mm in length) was used as the working electrode. The same reference and counter electrodes was applied as above. A 5 mL of 10 mM PBS (pH 7.4) with 0.10 M KCl was degassed thoroughly with nitrogen. A known concentration of Ru-Nafion nanoparticles was then added. The cell was sealed and sonicated for 2 min to obtain a well dispersed suspension. Subsequently chronoamperometry was performed by applying a series of potentials to the wire electrode with an atmosphere of $N_2$ maintained above the solution. Control experiments were carried out in the same buffer solution without the nanoparticles. For the oxalate experiments, a known concentration of sodium oxalate solution and the Ru-Nafion nanoparticles were sequentially added to the degassed buffer solution, following by the same sonication strategy and chronoamperometry experiments. Impact spikes were analyzed using SignalCounter software developed by Dario Omanovic (Centre for Marine and Environmental Research, Ruder Boskovic Institute, Croatia). Note that the employed potentiostat (Metrohm micro Autolab Type II) has been shown to conserve charge.

Example 1: An Ru-Nafion particle comprised of a Nafion polymer and $Ru(bpy)_3^{2+}$ dopant

Ru-Nafion Synthesis Method

Nafion nanoparticles bulk modified with $Ru(bpy)_3^{2+}$ (Ru-Nafion) were prepared with the re-precipitation method. 5 μL of 100 mM $Ru(bpy)_3^{2+}$ solution was mixed with 100 μL condensed Nafion solution in an alcohol/water mixture (12.5 wt. %). The mixture was then injected dropwise into 2 mL deionized water under vigorously stirring at 600 rpm for 5 min. The obtained light yellow transparent solution was subjected to sonication for 30 min at room temperature, followed by centrifugation at 10000 rpm for 10 min. To remove excess $Ru(bpy)_3^{2+}$, the precipitate was washed with water three times. Ru-Nafion particles were then obtained and dispersed in 1 mL deionized water to make a suspension. In this method $Ru(bpy)_3^{2+}$ molecules are incorporated into Nafion probably due to two forces: one is the strong electrostatic interactions between $Ru(bpy)_3^{2+}$ and the sulfonate groups of Nation; the other is the hydrophobic interaction between $Ru(bpy)_3^{2+}$ and the fluorocarbon backbone of Nafion. Figure 1a outlines the synthetic process and shows images of the sample at each step under white and ultraviolet light (254 nm) illumination. Orange light emission upon ultraviolet light excitation was observed and is ascribed to the fluorescence of $Ru(bpy)_3^{2+}$. After washing and centrifuging for three times to remove excess $Ru(bpy)_3^{2+}$, the precipitate was observed to become strongly orange in colour while the upper solution became transparent (Figure 1a), indicating the successful incorporation of the $Ru(bpy)_3^{2+}$ into the Nafion structures.

Characterisation of Ru-Nafion particles by cyclic voltammetry

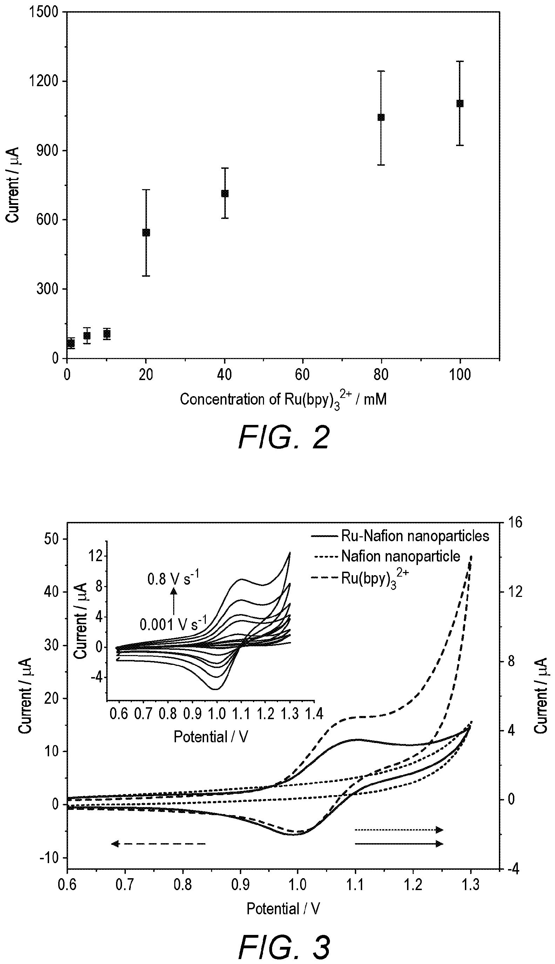

Different concentrations of $Ru(bpy)_3^{2+}$ for making Ru_Nafion nanoparticles was investigated (Figure 2) within the range of 1 mM to 100 mM. Their oxidation signal was assessed by cyclic voltammetry by drop-casting $1.5 \times 10^8$ nanoparticles at a GC electrode ($d$ = 3 mm) in 10 mM PBS (pH 7.4) containing 0.1 M KCl at the scan rate of 0.1V s$^{-1}$. Ru-Nafion nanoparticles made using 100 mM $Ru(bpy)_3^{2+}$ were found to show the highest oxidation signal in cyclic voltammetry and were used in the following experiments.

Characterisation of Ru-Nafion particles by scanning electron microscopy (SEM)

The synthesized Ru-Nafion nanoparticles were characterized by scanning electron microscopy (SEM) and UV-Vis spectroscopy. Figure 1b shows a representative SEM image of the nanoparticles. Different (spherical, triangular and irregular) shapes were seen, as shown in Figure 1b and inset. The size distribution of the measured particles (378 samples) is shown in Figure 1c. The average size is ca 0.46 ± 0.40 $\mu$m.

Characterisation of Ru-Nafion particles by UV-Vis spectroscopy

UV-Vis spectroscopy demonstrated that the Nafion alcohols/water solution containing the same concentration ($2.5 \times 10^{-12}$ mol•dm$^{-3}$) of Nafion with the Ru-Nafion nanoparticles suspension exhibited no absorbance peak (solid curve in Figure 1d), while for a Ru(bpy)$_3^{2+}$ aqueous solution (1mM, dot curve), two characteristic absorption peaks were observed at 287 nm and 457nm, these can be assigned to the ligand-to-ligand charge transfer $\pi$-$\pi^*$ transitions and the metal-to-ligand charge-transfer band respectively. The characteristic absorption peaks of Ru(bpy)$_3^{2+}$ were also observed in the suspension of Ru-Nafion nanoparticles (dashed curve), further evidencing that the Ru(bpy)$_3^{2+}$ is incorporated in the Nafion structures.

The maximum uptake of Ru(II) onto Nafion was estimated via measurement of the absorption maximum of Ru(bpy)$_3^{2+}$ in solution at 454 nm using UV-Vis spectroscopy before and after absorption into the Nafion nanoparticles. The absorbance loss relates to the amount of Ru(bpy)$_3^{2+}$ incorporated in the Ru-Nafion nanoparticles. Using the Beer-Lambert law the Ru$^{2+}$: Nation ratio can be calculated to be $9.9 \pm 3.3 \times 10^{18}$ Ru ions per gram Nafion using the following expression,

$$ N_A \times \left( \frac{A_{before} - A_{after}}{\varepsilon l} \right) \times \frac{V}{m_{nafion}} $$

where $\varepsilon$ is the molar extinction coefficient of Ru(bpy)$_3^{2+}$ with a value of $1.4 \times 10^{-4}$ M$^{-1}$ cm$^{-1}$, [1] $l$ is the optical path of 0.1 cm, $A_{before}$ and $A_{ater}$ are the absorbance of Ru(bpy)$_3^{2+}$ solution before and after the absorption. V is the volume of the Ru(bpy)$_3^{2+}$ in solution. The mass of one single nanoparticle is $7.7 \times 10^{-13}$ g ( $m = \frac{\rho 4 \pi r^3}{3}$ , r = 0.432 ± 0.398 $\mu$m, $\rho$ = 1.858 g cm$^{-3}$). Thus, the maximum number of Ru(II) molecules doped into a single Nafion nanoparticle is $7.6 \pm 4.8 \times 10^6$.

Cyclic voltamametric analysis of Ru-Nafion particles

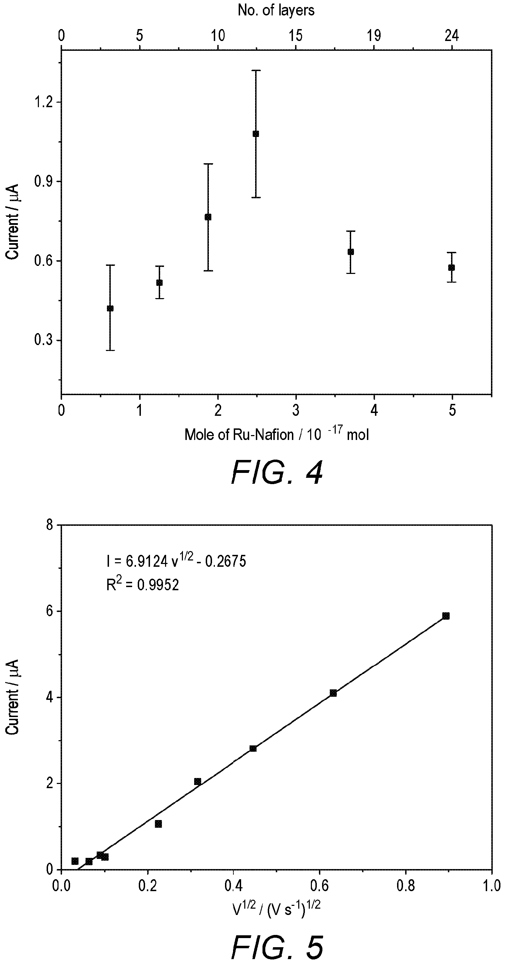

The electrochemical behavior of ensembles of Ru-Nafion nanoparticles were investigated using cyclic voltammetry. The voltammetric response of a 1 mM Ru(bpy)$_3^{2+}$ solution at a GC electrode between 0.6 V and 1.3 V vs SCE was recorded, as shown in Figure 3 (dashed curve). A reversible voltammetric feature centered at +1.05 V was observed, which is ascribed to the characteristic redox behavior of Ru(bpy)$_3^{2+}$ with the oxidation of the Ru(II) to Ru(III) via a one-electron transfer process. A GC macroelectrode dropcast with varying amount of Ru-Nafion nanoparticles range of $6.2 \times 10^{-11}$ mol to $5.0 \times 10^{-11}$ mol was investigated (Figure 4). At the small coverages from $6.2 \times 10^{-18}$ mol to $2.5 \times 10^{-17}$ mol, the magnitude of the Ru(bpy)$_3^{2+}$ voltammetric response is found to be roughly constant within error. The thickness of the Ru-Nafion nanoparticles coated on the electrode surface was estimated by converting the mass of dropcast material into the average number of monolayers. Assuming the Ru-Nafion nanoparticles is quasi-spherical, with a homogeneous coverage over the surface, the number of layers ($N_{NPs}$) of nanoparticles is calculated based on the following Equation:

$$ N_{NPs} = \frac{cV}{\frac{A}{\pi r^2} \times \rho \times \frac{4}{3} \pi r^3} = \frac{3cV}{4A\rho r} $$

where $c$ is the concentration of Ru-Nafion nanoparticles, $V$ is the dropcast volume, $\rho$ represents the Nafion density in water (1.858 g m$^{-3}$), A is the geometric surface area of the electrode, and $r$ is the radius of the nanoparticles from SEM analysis. $2.5 \times 10^{-17}$ mole Ru-Nafion nanoparticles casted on a GC electrode corresponding to 14 layers of nanoparticles gives the highest oxidation current.

Next, a GC electrode drop-cast with $1.5 \times 10^8$ Ru-Nafion nanoparticles was anodically scanned. As shown in Figure 3 (solid curve), a characteristic oxidation peak of Ru(II) to Ru(III) was observed at +1.1 V, and an associated reduction peak at +1.0 V. A control experiment was conducted by drop-casting the same amount of a non-doped Nafion nanoparticle suspension onto the GC electrode surface. No redox signals were observed on a Nafion nanoparticle-modified GC electrode due to the absence of $Ru(bpy)_3^{2+}$ (Figure 3, dot curve), indicating the successful incorporation of $Ru(bpy)_3^{2+}$ in the Ru-Nafion nanoparticles.

The voltammetric response of the drop-cast Ru-Nafion nanoparticles at a series of scan rates ranging from 0.001 V s$^{-1}$ to 0.8 V s$^{-1}$ is shown in Figure 3. The oxidative peak current is found to vary linearly with the square root of the scan rate ( I = 6.91, $R^2$ = 0.9952), suggesting that it is a diffusional control process (Figure 5). The diffusion coefficient (D) of $Ru(bpy)_3^{2+}$ incorporated Nafion nanoparticles was estimated according to the Randles-Sevcik equation:

$$I = 2.69 \times 10^5 n^{3/2} A D^{1/2} C_{Ru} v^{1/2}$$

where n is the transfer electron of 1, D is the diffusion coefficient, $C_{Ru}$ is $Ru(bpy)_3^{2+}$ incorporated Nafion nanoparticles, A is the electrode area ($7.07 \times 10^{-6}$ m$^2$), v is the scan rate.

For the concentration of $Ru(bpy)_3^{2+}$ incorporated Nafion nanoparticles can be estimated by the following equation:

$$C_{Ru} = \frac{n_{Ru}}{m_{Nafion,tot}/\rho}$$

$n_{Ru}$ is the moles of $Ru(bpy)_3^{2+}$ from UV-Vis results, $m_{Nation,tot}$ is the mass of Nafion in the nanoparticles, $\rho$ is the density of Nafion. Accordingly $C_{Ru}$ of $3.11 \times 10^{-2}$ mol•dm$^{-3}$ was obtained. The diffusion coefficient is therefore estimated to be $1.4 \times 10^{-10}$ cm$^2$ s$^{-1}$ which is consistent with the voltammetric behavior of $Ru(bpy)_3^{2+}$ in Nafion film.

The separation between the anodic and cathodic peak is about 100 PQ at a scan rate of 0.1 V s$^{-1}$, which is consistent with that of $Ru(bpy)_3^{2+}$ incorporated in Nafion coated on a pyrolytic graphite. The observed diffusional control in the CV of the drop-cast Ru-Nafion nanoparticles are likely either from a mass-transport limited oxidation of the electroactive species ($Ru(bpy)_3^{2+}$) within the Nafion or a diffusion-like electron hopping between neighboring electroactive Ru(II) centers.

Based on the maximum uptake of Ru(II) ($7.6 \pm 4.8 \times 10^6$) into one Nafion nanoparticle from the UV-Vis analysis, the expected maximum charge from $1.5 \times 10^8$ Ru-Nafion nanoparticles can be estimated to be ($1.8 \pm 0.6 \times 10^{-4}$ C). In contrast, the charge ($Q_{cv}$) obtained by integrating the oxidation peak in the voltammogram (solid curve) of Figure 3 is $3.96 \pm 0.23 \times 10^{-1}$ C, only a small fraction of expected maximum charge. Similarly, a small fraction of current response was also observed for different dropcast amount of Ru-Nafion nanoparticles with a range from 3 to 24 layers It is likely that the outermost layers are not in electrical contact with the electrode, thus significant quantities of the incorporated Ru(II) in the outer layers of nanoparticles do not participate the electron transfer process.

Nano-impact analysis of Ru-Nafion particles

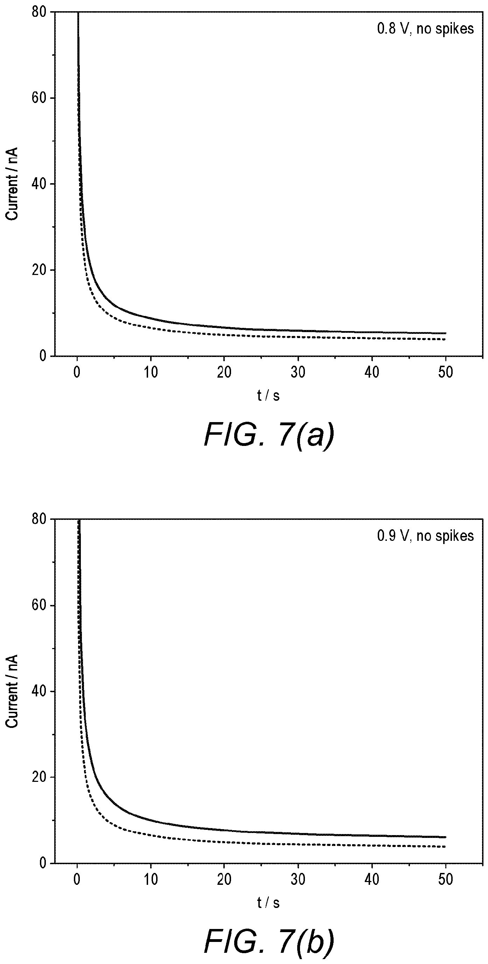

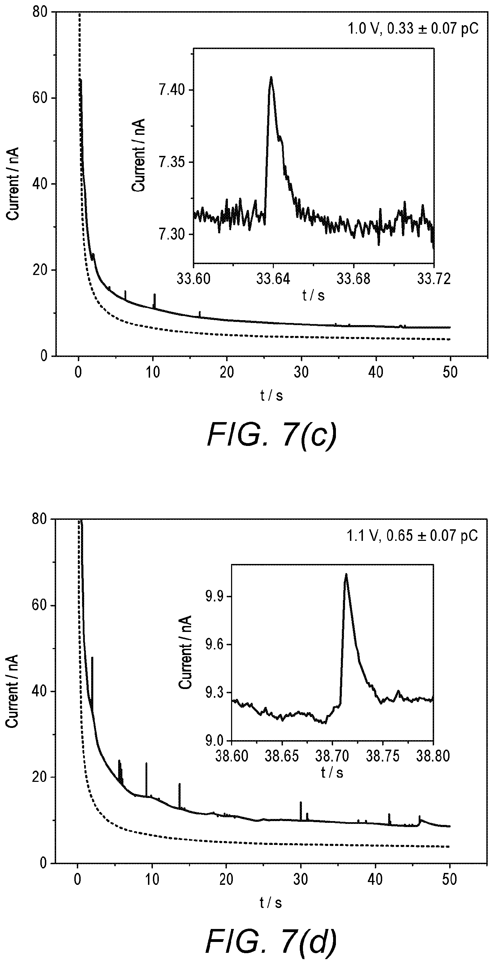

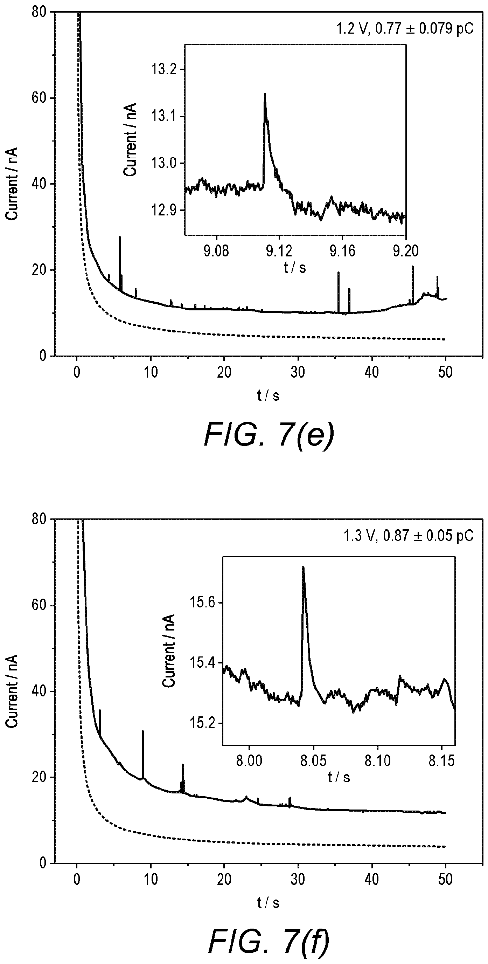

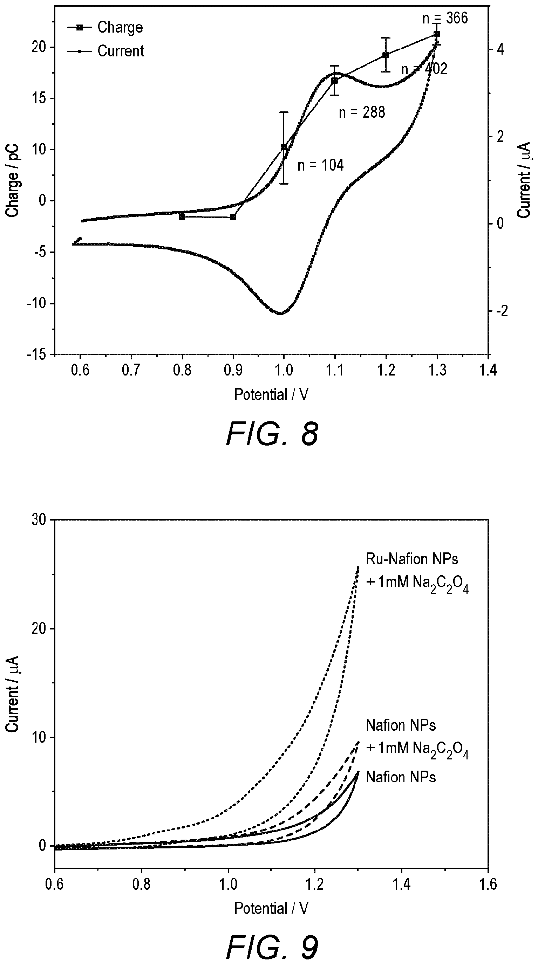

The oxidation of individual Ru-Nafion nanoparticles was studied via the 'nano-impacts' method. A clean carbon microwire electrode (l = 1 mm, d = 7 μm) was inserted in a suspension of Ru-Nafion nanoparticles ($2.5 \times 10^{-13}$ mol•dm$^{-3}$) with 10 mM PBS buffer (pH 7.4) and 0.1 M KCl. Figure 6a shows a typical chronoamperometric profile of Ru-Nafion nanoparticles at +1.1 V. Oxidative (Faradaic) spikes are observed, evidencing the impacts of the individual Ru-Nafion nanoparticle. A total of 364 spikes were observed from 16 recorded chronoamperograms of 50 s duration each. No spikes were observed in the suspension of the Nafion nanoparticles without $Ru(bpy)_3^{2+}$ incorporated. Figure 6c shows the dependence of the log (base 10) of spike charge on the log (base 10) of the associate duration time of the current spikes. The spike duration for the oxidative impact experiment was found to be in the range of ca. 3-30 ms. Chronoamperograms were further performed at a series of applied potentials from +0.8 V to +1.3 V vs. SCE. In the presence of the Ru-Nafion nanoparticles, no spikes were detected at lower oxidation potentials, such as +0.8 V and +0.9 V. When the potential applied was +1.0 V or higher, such as +1.1 V, +1.2 V and +1.3 V, characteristic spikes were observed (Figure 7). The current spikes collected at different applied potentials were analyzed and the average charge at each potential was plotted against the applied potentials, as shown in Figure 8(squares). The average current from the spikes is found to have an onset at the potentials which $Ru(bpy)_3^{2+}$ oxidation observed in the CV of the GC electrode modified with nanoparticles ensembles (Figure 8, black curve), evidencing that the detected current spikes correspond to Faradaic currents associated with $Ru(bpy)_3^{2+}$ oxidation by the individual impacting Ru-Nafion nanoparticles.

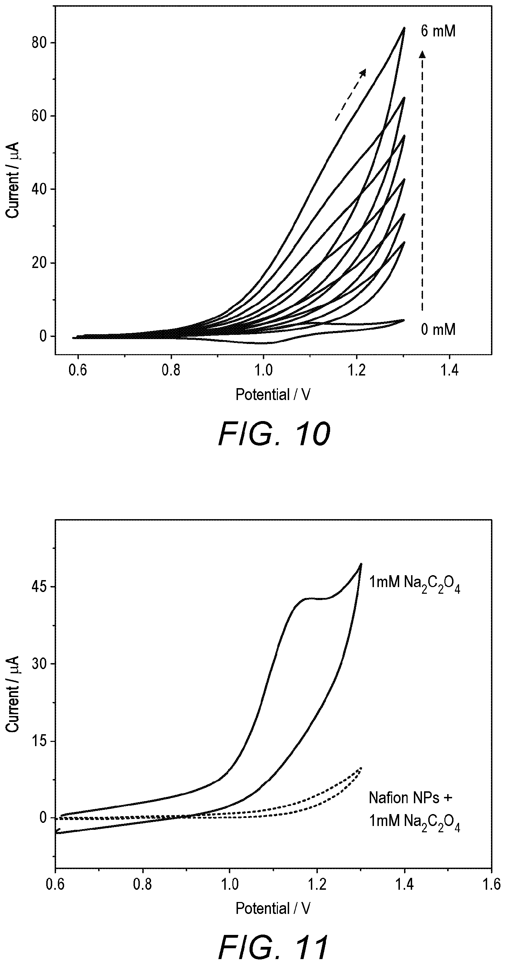

The oxidative charge due to the oxidation of single Ru-Nafion nanoparticle was calculated by integrating the area of each spike. Figure 6b shows the histogram of the charge from 364 individual current spikes, giving an average of $0.65 \pm 0.07$ pC. The corresponding number of oxidized $Ru(bpy)_3^{2+}$ ($N_{Ru(bpy)3_{2+}}$) molecules in each Ru-Nafion nanoparticle can be inferred to be $4.1 \pm 0.4 \times 10^6$ based on one electron transfer for each $Ru(bpy)_3^{2+}$. This is consistent with the value of $7.6 \pm 4.8 \times 10^6$ estimated from the UV-Vis analysis. Electrocatalytic properties of Ru-Nafion particles The catalytic performance of the Ru-Nafion nanoparticles towards oxalate oxidation was investigated at both ensemble and single nanoparticle levels. The electrochemical behavior of Nafion nanoparticles (Figure 9, dashed curve) and Ru-Nafion nanoparticles (Figure 9, dot curve) drop-casted on a GC electrode in the presence of 1 mM $Na_2C_2O_4$ was separately studied via cyclic voltammetry. It is observed that the presence of Ru-Nafion nanoparticles causes an increase in the oxidation current compared with that of non-doped Nafion nanoparticles modified a GC electrode, due to the catalytic effect of $Ru(bpy)_3^{2+}$ in the nanoparticle on the oxidation of oxalate. With an increase of $Na_2C_2O_4$ concentrations ranging from 0 to 6 mM, the voltammetric responses of the GC electrode dropcast with a $1.5 \times 10^8$ Ru-Nafion nanoparticles were recorded and are shown in Figure 10. The catalytic oxidation current increases with the concentration of $Na_2C_2O_4$ increasing. However, this cannot provide the direct evidence for the catalytic effect of $Ru(bpy)_3^{2+}$ on the oxalate oxidation since the reversible oxidation of $Ru(bpy)_3^{2+}$ itself (Figure 3, solid curve) and irreversible oxidation of oxalate (Figure 11, solid curve) occur at the similar potentials on the macro electrode modified with ensembles of Ru-Nafion nanoparticles.

The electrochemical behavior of Ru-Nafion nanoparticles in the presence of $Na_2C_2O_4$ at single nanoparticle level was also investigated.

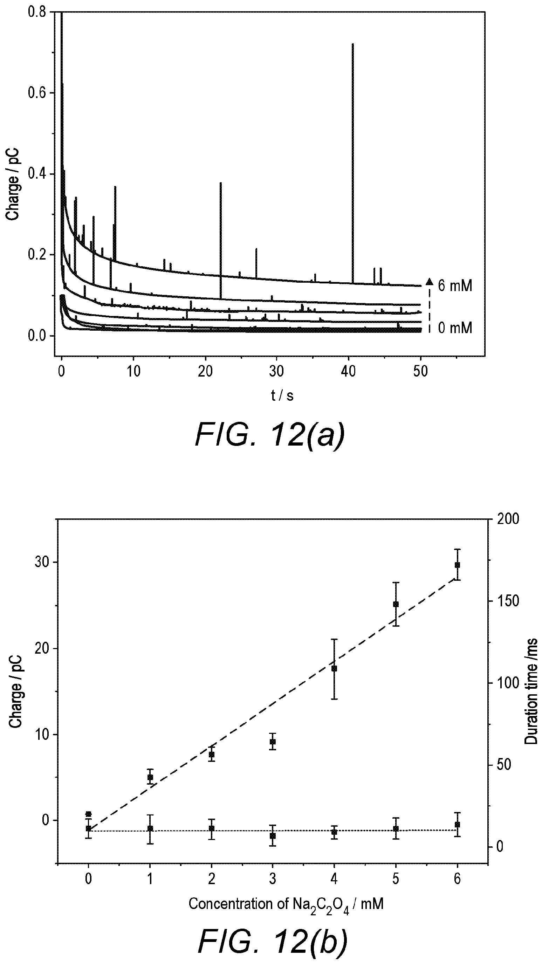

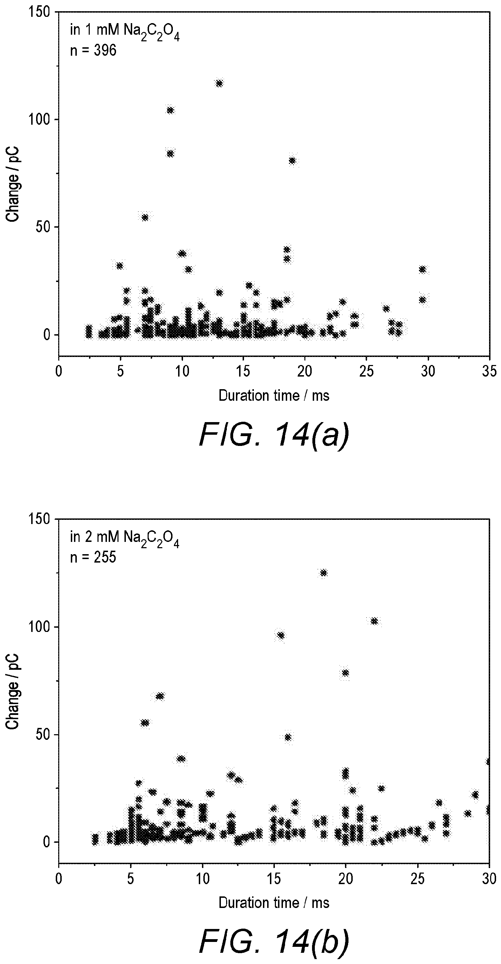

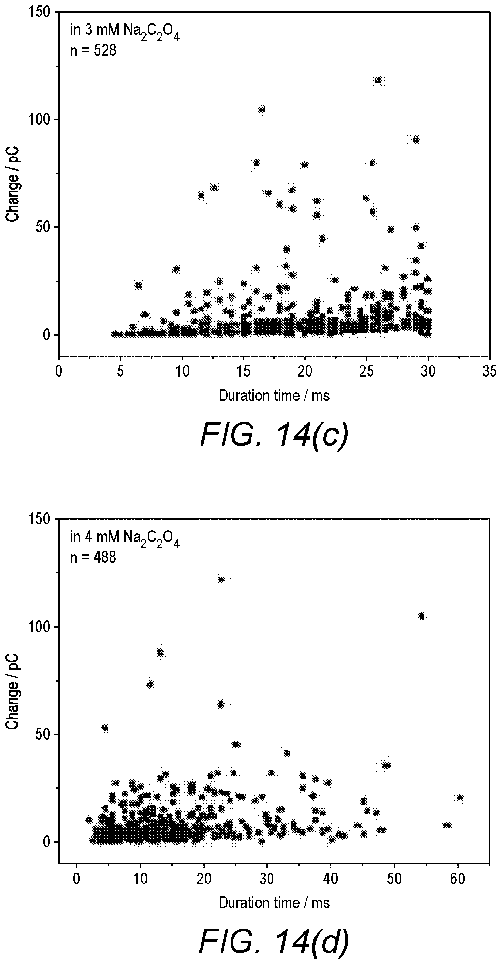

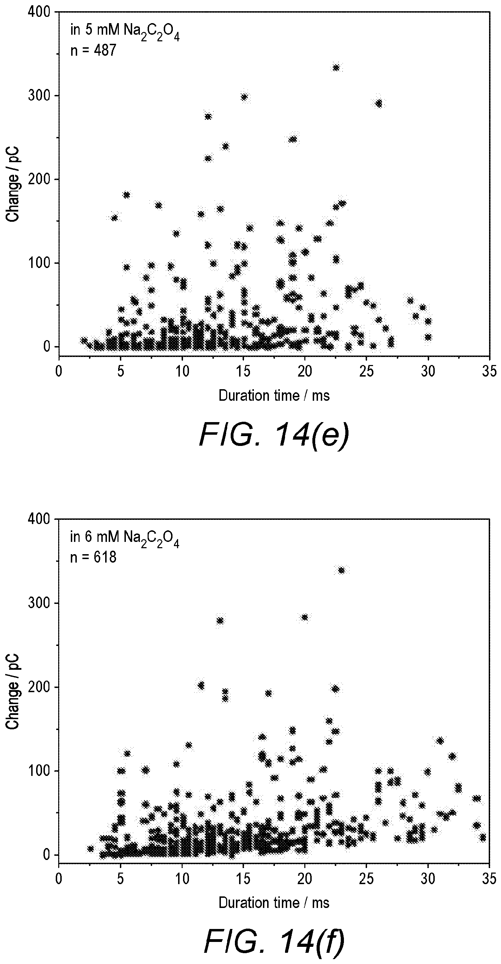

Figure 12a shows typical chronoamperometric profiles of a carbon microwire electrode at +1.1 V in a suspension of Ru-Nafion nanoparticles ($2.5 \times 10^{-13}$ mol•dm$^{-3}$) which contains different concentrations of $Na_2C_2O_4$ from 0 to 6 mM. Current spikes are significantly enhanced in the presence of $C_2O_4^{2-}$ and the higher the concentration of $C_2O_4^{2-}$, the bigger current spikes are observed. Charge analysis for individual current spikes was conducted and the average charge of individual spikes against the concentration of $C_2O_4^{2-}$ was plotted in Figure 12b. (dashed line). A linear increase of the average charge against the concentration is observed. The average duration time of the spikes was found to be nearly constant (ca. 10 ms) for all concentrations of $C_2O_4^{2-}$. The spike charge is plotted against the corresponding duration time in different concentration of $C_2O_4^{2-}$ (Figure 14), showing that the spikes with higher charge from electrocatalytic oxidation appeared more with the increase of the concentration of $Na_2C_2O_4$, which is consistent with the proposed electrocatalysis.

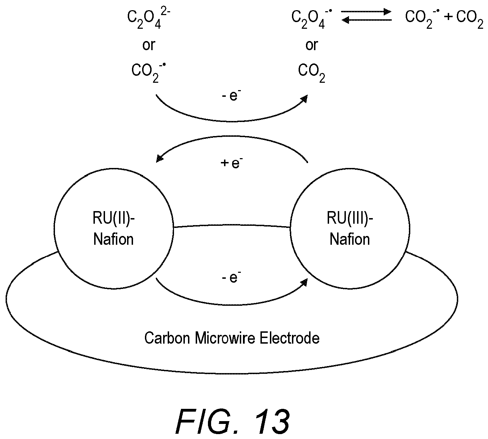

Charge analysis shows that the average charge per spike at +1.1V in the presence of 6 mM $Na_2C_2O_4$ is $29.8 \pm 1.8$ pC, which is ca 50 times of the value ($0.65 \pm 0.07$ pC) in the absence of oxalate as reported above. This significant enhancement of the current spikes in the presence of the oxalate demonstrates the electrocatalytic effects of Ru-Nafion nanoparticle on the oxidation of oxalate. As illustrated in Figure 13, the formed $Ru(bpy)_3^{3+}$ from $Ru(bpy)_3^{2+}$ oxidation reacts with $C_2O_4^{2-}$ and returns to $Ru(bpy)_3^{2+}$. The product of $C_2O_4^{2-}$ is $C_2O_4^-$ which further undergoes a dissociation step into $CO_2$ and $CO_2^-$, and the latter is also able to reduce $Ru(bpy)_3^{3+}$ back to $Ru(bpy)_3^{2+}$ and forms $CO_2$. 14

Example 2: A particle comprised of a Nafion polymer and a $PQ^{2+}$ dopant

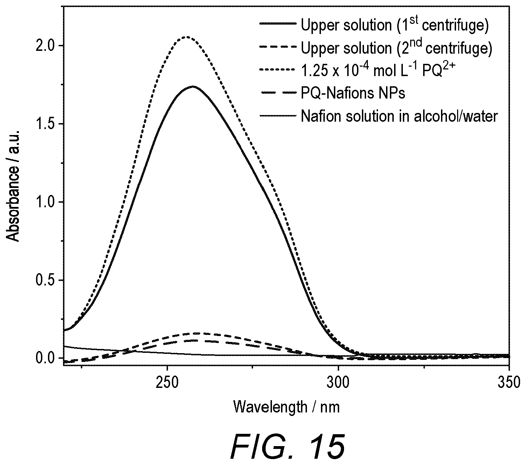

Figures 15 to 26, briefly discussed above, relate to Example 2.

PQ-Nafion Synthesis Method

Nafion particles bulk modified with $PQ^{2+}$ (PQ-Nafion) were prepared with the re-precipitation method as described for Example 1. 2.5 μL of 100 mM $PQ^{2+}$ solution was mixed with 50 μL condensed Nafion solution in an alcohol/water mixture (12.5 wt. %).

Characterisation of PQ-Nafion particles by UV-Vis spectroscopy

Using UV-Vis spectroscopy, PQ-Nafion particles (dashed dot dot curves) demonstrated the same characteristic absorption peak (257 nM) as free $PQ^{2+}$ in aqueous solution (0.215 mM, dot curves), indicating that $PQ^{2+}$ is incorporated in the Nafion structures (Figures 15). A Nafion alcohol/water solution containing the same concentration of Nafion as the PQ-Nafion nanoparticles suspension exhibited no absorbance peak (solid curve in Figure 15).

The maximum uptake of $PQ^{2+}$ onto Nafion can be estimated via measurement of the absorption maximum of $PQ^{2+}$ in solution at 257 nM, using UV-Vis spectroscopy before and after absorption into the Nafion nanoparticles, utilising the Beer-Lambert law, as demonstrated in Example 1. The total number of $PQ^{2+}$ incorporated into Nafion nanoparticles was estimated to be $3.03 \times 10^{-8}$ mol, while the number of $PQ^{2+}$ molecules incorporated into Nafion nanoparticles was estimated to be $2.02 \times 10^6$.

Characterisation of PQ-Nafion particles by scanning electron microscopy (SEM)

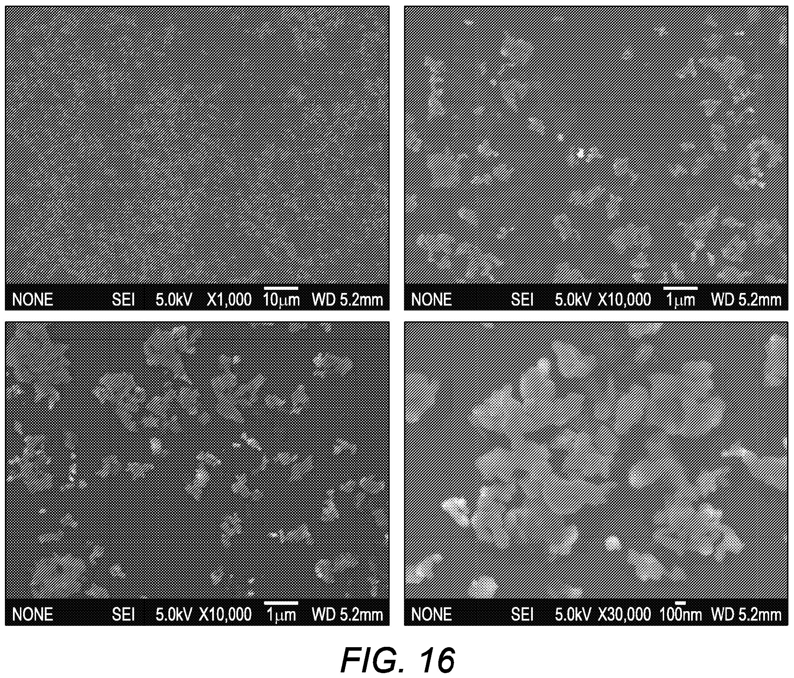

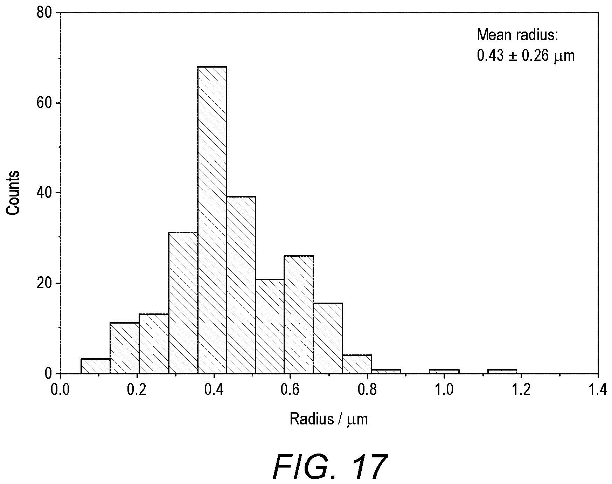

The synthesized PQ-Nafion nanoparticles were characterized by scanning electron microscopy (SEM) and UV-Vis spectroscopy. Figure 16 shows a representative SEM image of the PQ-Nafion particles. The size distribution of the measured particles (243 samples) is shown in Figure 17. The average size is ca $0.43 \pm 0.26$ $\mu$m in radius.

Cyclic voltamametric analysis of PQ-Nafion particles

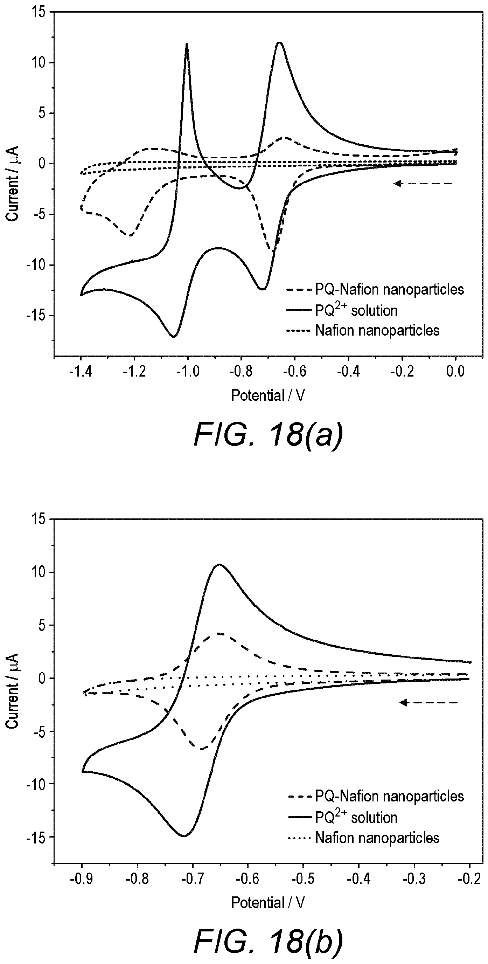

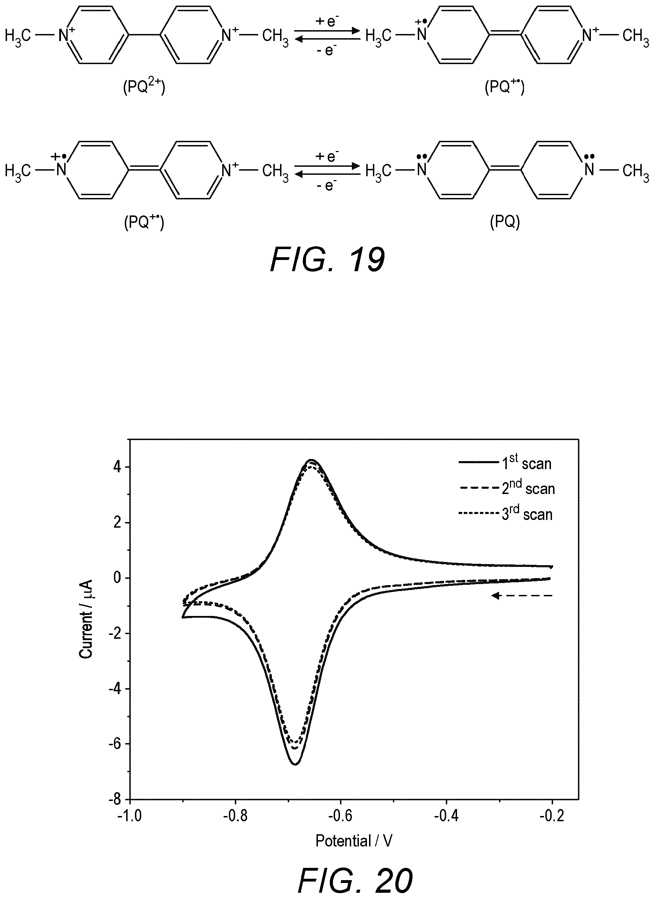

The electrochemical behavior of ensembles of PQ-Nafion particles were investigated using cyclic voltammetry. The voltammetric response of a 0.1 mM $PQ^{2+}$ solution (0.01 M phosphate buffer (pH 7.4) 0.1M KCl and a GC electrode drop-cast with a solution containing 10 $\mu$L of $3.01 \times 10^{-9}$ mol $L^{-1}$ PQ-Nafion nanoparticles, or non-doped Nafion nanoparticles, was firstly assessed between -1.4V and 0.0V, with a scan-rate of 0.1 V $s^{-1}$ (Figure 18a); the voltammetric response of a 0.1 mM $PQ^{2+}$ solution (0.1 M phosphate buffer (pH 7.4) 0.1M KCl and a GC electrode drop-cast with a solution containing 10 $\mu$L of $3.01 \times 10^{-9}$ mol $L^{-1}$ PQ-Nafion nanoparticles or Nafion nanoparticles was also assessed between -0.9V and -0.2V, with a scan-rate of 0.1 V $s^{-1}$ (Figure 18b). The mechanism of $PQ^{2+}$ electrochemical reduction is demonstrated in Figure 19. In both cases, the PQ-Nafion particles demonstrate a similar cyclic voltammetry profile to the free $PQ^{2+}$ solution, demonstrating the incorporation of $PQ^{2+}$ into the PQ-Nafion particles. The non-doped Nafion particle, as a control, did not show the same cyclic voltammetry profile.

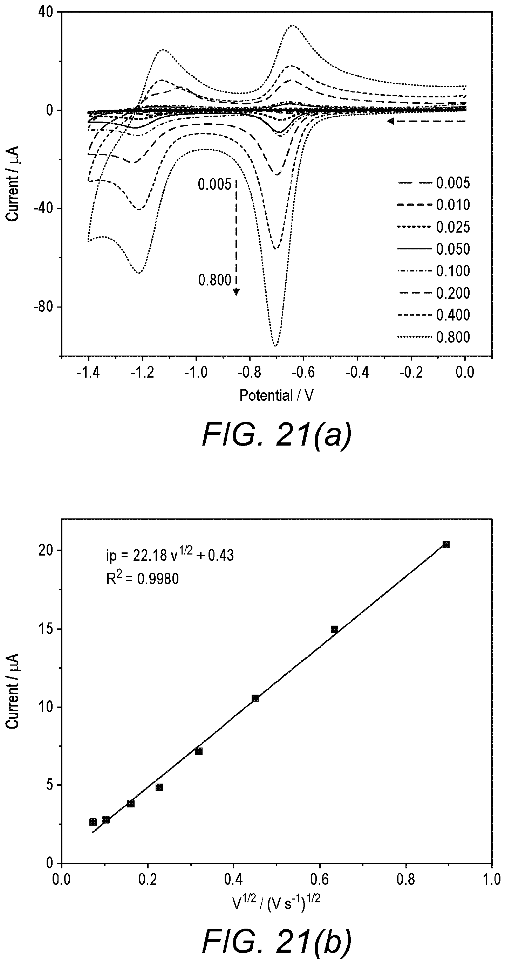

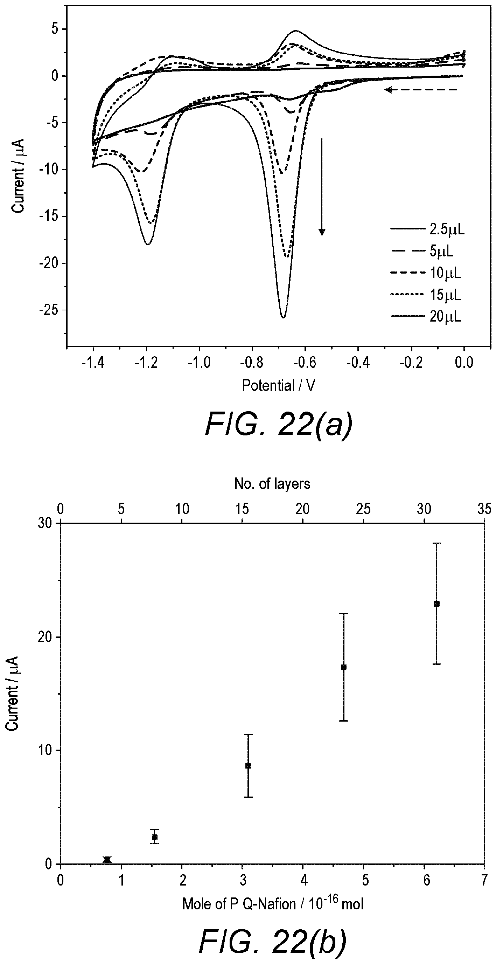

Cyclic voltammetric responses with a GC electrode drop-cast with a solution containing 10 $\mu$L of $3.01 \times 10^{-9}$ mol $L^{-1}$ PQ-Nafion particles, with a scan rate of 0.1 V $s^{-1}$, were shown to have similar profiles with up to three scans (Figure 20). The voltamettric current was shown to vary with a) scan-rate, ranging from 0.001 V $s^{-1}$ to 0.8 V $s^{-1}$ using 10 $\mu$L of $3.01 \times 10^{-9}$ mol $L^{-1}$ PQ-Nafion particles (Figure 21), and b) volume of $3.01 \times 10^{-9}$ mol $L^{-1}$ PQ-Nafion particles, ranging from 2.5-20 $\mu$L (Figure 22a) with a constant scan-rate of 0.1 V $s^{-1}$. As was calculated in Example 1, the average charge of one PQ-Nafion particle was estimated to be $2.87 \times 10^{-14}$, and the number of PQ in one particle was estimated to be $1.79 \times 10^{5}$.

Nano-impact analysis of PQ-Nafion particles

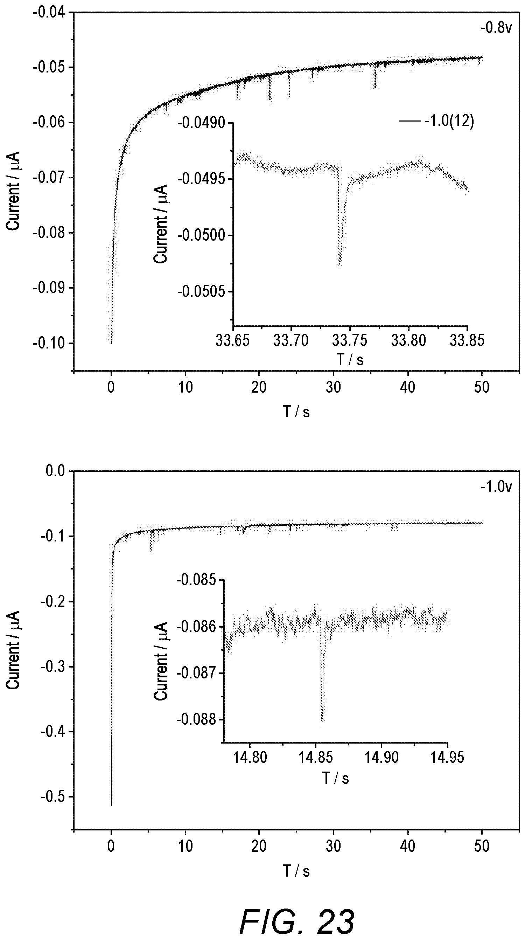

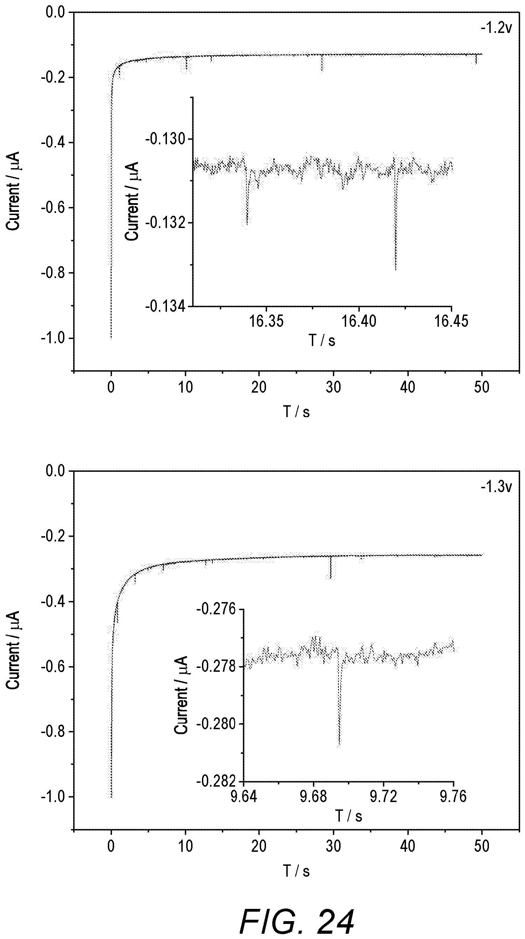

The electrochemical behavior of PQ-Nafion particles was assessed by the nano-impacts method (Figure 23 and Figure 24). An increase of the average charge against the concentration is observed (Table 1).

Table 1

| PQ-Nafion nanoparticles | | | | | | | |
|---|---|---|---|---|---|---|---|
| Potential / V | -0.7 | -0.8 | -0.9 | -1 | -1.1 | -1.2 | -1.3 |
| spikes | 205 | 350 | 249 | 233 | 207 | 427 | 198 |
| **average charge / pC** | **0.27** | **0.40** | **0.44** | **0.454** | **0.534** | **0.62** | **0.69** |
| standard deviation of charge / pC | 0.40 | 0.62 | 0.88 | 0.33 | 0.345 | 0.72 | 1.20 |
| standard error of charge (SD/SQRT(n)) | 0.02 | 0.03 | 0.06 | 0.02 | 0.02 | 0.03 | 0.09 |
| average duration time / ms | 2.14 | 6.5 | 8.5 | 3.26 | 4.42 | 5.2 | 3.1 |
| standard error of duration time / ms | 2.28 | 3.51 | 2 | 1.84 | 2.01 | 1.7 | 1.4 |
| standard error of duration time (SD/SQRT(n)) | 0.13 | 0.18 | 0.13 | 0.12 | 0.14 | 0.08 | 0.10 |

Using the methods described in Example 1, the corresponding number of $PQ^{2+}$ molecules in each Ru-Nafion nanoparticle was estimated to be $1.68 \times 10^{6}$ based on one electron transfer for $PQ^{2+}$.

Electrocatalytic properties of PQ-Nafion particles

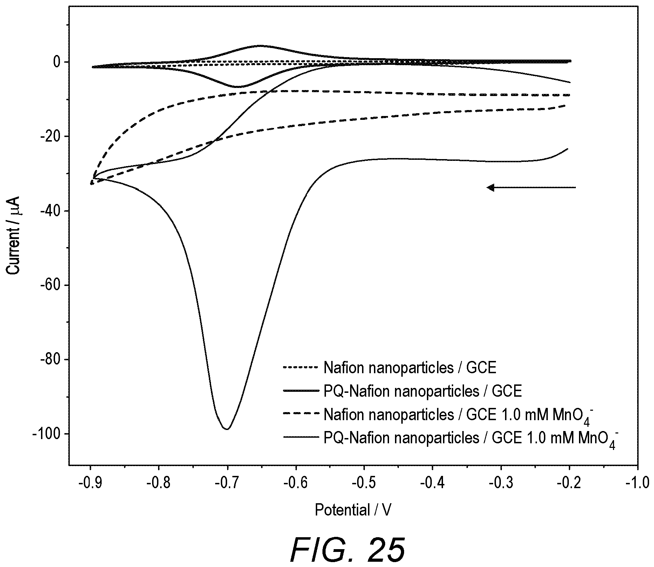

Cyclic voltammetric responses were measured at a GC electrode modified with 10 uL PQ-Nafion particles in 10 mM PBS, both without and with 1mM $KMnO_4$ (Figure 25), and the current was also measured in the presence of $KMnO_4$ solution over several scans. The anodic current increased in the presence of $KMnO_4$ indicating the electrocatalytic properties of PQ-Nafion particles in the presence of $KMnO_4$.

Example 3: Synthesis and Characterisation of Nation nanoparticles

Synthesis of Nafion particles

Nafion nanoparticles were synthesized by the re-precipitation method. A 100 μL condensed Nafion alcohol/water solution (12.5 wt. %) was injected dropwise into 2 mL deionized water in a flask under vigorously stirring at 600 rpm for 5 min. The obtained solution was subjected to sonication for 30 min at room temperatureThe solution was transferred into a 1 mL centrifuge tube and centrifuged at 10000 rpm for 10 min. The precipitate was redispersed in 0.5 mL deionized water and a Nafion nanoparticle suspension was obtained.

Characterisation of Nafion particles by SEM and UV-Vis spectroscopy

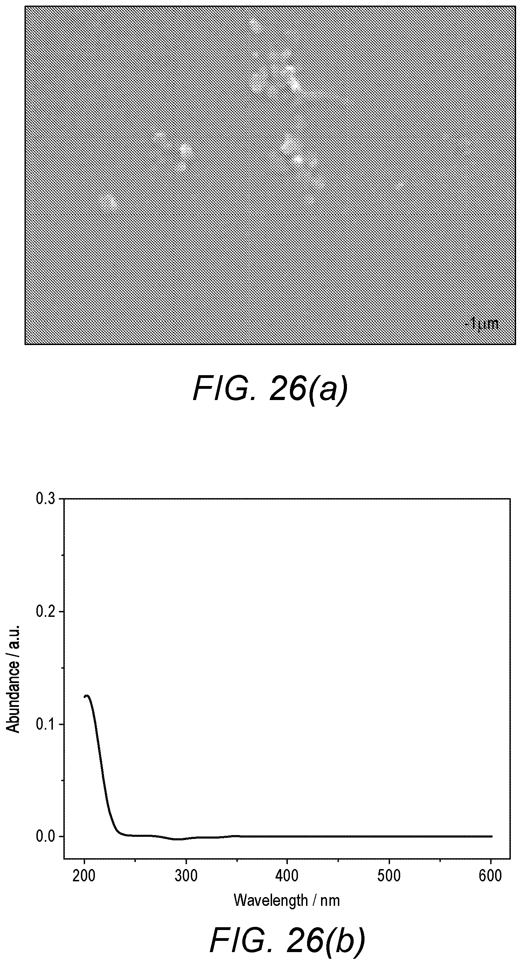

The synthesized Nafion nanoparticles were characterized by scanning electron microscopy (SEM). The spherical and some irregular shapes of particles were seen by SEM (Figure 26a) evidencing that the Nafion nanoparticles were successfully synthesized. The Nafion nanoparticles were also investigated by UV-Vis spectroscopy and no absorbance peak was observed (Figure 26b).

## Claims

1. A doped particle, wherein the particle comprises a polymer formed from a perfluorinated monomer and a monomer having a sulfonate group ('the polymer'), wherein a dopant comprising a molecular cationic species is disposed within the polymer;

   wherein the dopant is dispersed throughout the polymer; and
   wherein at least 50% of the particles, by number, have an aspect ratio, as measured using scanning electron microscopy, of 1.5 or less, with scanning electron microscopy being conducted as described in the specification.

2. A doped particle according to claim 1, wherein the dopant is embedded within the polymer.

3. The doped particle according to any one of the preceding claims, wherein the doped particle is formable by a method comprising

   a. providing a solution of a polymer formed from a perfluorinated monomer and a monomer having a sulfonate group ('the polymer') in a first liquid, the solution having suspended or dissolved therein the dopant;
   b. contacting the solution of the polymer in the first liquid with a second liquid, wherein the solubility of the polymer in the second liquid is lower than the solubility of the polymer in the first liquid, such that particles comprising the polymer and the dopant precipitate.

4. A doped particle according to any one of the preceding claims, wherein the particle has a diameter of less than 100 μm; and/or

   wherein the particle has a diameter of from 0.1 μm to 10 μm; or from 0.1 μm to 5 μm; and/or
   of substantially spherical shape and/or having an aspect ratio of 1.5 to 1.

5. A doped particle according to any one of the preceding claims, wherein the dopant is selected from an electroactive species, a catalytic species, a drug and a diagnostic agent; and/or
   wherein the dopant is an electrocatalytic species.

6. A doped particle according to any one of the preceding claims, wherein the dopant has two oxidation states: an oxidised state and a reduced state, and the standard electrode potential for reducing the oxidised state to the reduced state is from -2V to 2V, vs SCE.

7. A doped particle according to any one of the preceding claims, wherein the dopant comprises a species selected from a metal complex, an organometallic species and an organic cation.

8. A doped particle according to claim 7, wherein the metal complex comprises the metal and one or more ligands, optionally containing aryl or heteroaryl groups, optionally wherein the metal complex comprises a cationic species of the formula $[M(L)_n]^{m+}$, wherein M is a metal, L is a ligand, which is optionally a species comprising one or more heterocycles, and n is an integer from 1 to 6, m is an integer and at least 1, wherein M may be selected from group 8 or 9 of the periodic table, optionally wherein M is Co or Ru and optionally wherein the one or more heterocycles heterocycle selected from pyridine and pyrrole and optionally wherein the heterocycle is a polyheterocycle.

9. A doped particle according to claim 7, wherein the organic cation is a heteroaryl cation, optionally a poly heterocyclic cation.

10. A doped particle according to any one of claims 1 to 7 and 9, wherein the dopant comprises a heteroaryl cation and one or more counterions; or wherein the molecular cationic species is 1, 1'- dimethyl-4, 4'- bipyridinium; or wherein the dopant comprises 1, 1'- dimethyl-4, 4'- bipyridinium dichloride.

11. A method of making particles, the method comprising

a. providing a solution of a polymer formed from a perfluorinated monomer and a monomer having a sulfonate group ('the polymer') in a first liquid;
b. contacting the solution of the polymer in the first liquid with a second liquid, wherein the solubility of the polymer in the second liquid is lower than the solubility of the polymer in the first liquid, such that particles comprising the polymer precipitate.

12. A method according to claim 11, wherein the solution of the polymer in a first liquid further comprises a dopant, which is dissolved or suspended in the first liquid, such that, in step (b), the particles comprising the polymer and the dopant precipitate; or
wherein the dopant comprises a molecular cationic species.

13. A substrate having thereon or therein the doped particles according to any one of claims 1 to 10, and optionally, wherein the substrate further comprises an electrically conductive material having therein or thereon the doped particles.

14. An electrode having therein or thereon the doped particles according to any one of claims 1 to 10.

15. The use of the doped particles according to any one of claims 1 to 10 as a catalyst in a reaction, as an electrocatalyst in an electrochemical reaction, in an electrochemical sensor, or in a fuel cell, a battery and a solar cell.

**Patentansprüche**

1. Dotiertes Partikel, wobei das Partikel ein Polymer umfasst, das aus einem perfluorierten Monomer und einem Monomer, das eine Sulfonatgruppe aufweist, gebildet ist ("das Polymer"), wobei ein Dotierstoff, der eine molekulare kationische Spezies umfasst, innerhalb des Polymers angeordnet ist;
wobei der Dotierstoff im gesamten Polymer dispergiert ist; und wobei mindestens 50 % der Partikel, nach Anzahl, ein Aspektverhältnis, gemessen unter Verwendung von Rasterelektronenmikroskopie, von 1,5 oder weniger aufweisen, wobei die Rasterelektronenmikroskopie wie in der Patentschrift beschrieben durchgeführt wird.

2. Dotiertes Partikel nach Anspruch 1, wobei der Dotierstoff in das Polymer eingebettet ist.

3. Dotiertes Partikel nach einem der vorhergehenden Ansprüche, wobei das dotierte Partikel durch ein Verfahren formbar ist, das Folgendes umfasst:

a. Bereitstellen einer Lösung eines Polymers, das aus einem perfluorierten Monomer und einem Monomer, das eine Sulfonatgruppe aufweist, gebildet ist ("das Polymer"), in einer ersten Flüssigkeit, wobei in der Lösung das Dotiermittel suspendiert oder gelöst ist;
b. Inkontaktbringen der Lösung des Polymers in der ersten Flüssigkeit mit einer zweiten Flüssigkeit, wobei die Löslichkeit des Polymers in der zweiten Flüssigkeit geringer als die Löslichkeit des Polymers in der ersten Flüssigkeit ist, sodass Partikel, die das Polymer und den Dotierstoff umfassen, ausfallen.

4. Dotiertes Partikel nach einem der vorhergehenden Ansprüche, wobei das Partikel einen Durchmesser von weniger als 100 $\mu$m aufweist; und/oder

wobei das Partikel einen Durchmesser von 0,1 μm bis 10 μm; oder von 0,1 μm bis 5 μm aufweist; und/oder eine im Wesentlichen kugelförmige Form und/oder ein Aspektverhältnis von 1,5 zu 1 aufweist.

5. Dotiertes Partikel nach einem der vorhergehenden Ansprüche, wobei der Dotierstoff aus einer elektroaktiven Spezies, einer katalytischen Spezies, einem Arzneistoff und einem diagnostischen Mittel ausgewählt ist; und/oder wobei der Dotierstoff eine elektrokatalytische Spezies ist.

6. Dotiertes Partikel nach einem der vorhergehenden Ansprüche, wobei der Dotierstoff zwei Oxidationszustände aufweist: einen oxidierten Zustand und einen reduzierten Zustand, und das Standardelektrodenpotential zum Reduzieren des oxidierten Zustands in den reduzierten Zustand zwischen -2 V und 2 V vs. SCE beträgt.

7. Dotiertes Partikel nach einem der vorhergehenden Ansprüche, wobei der Dotierstoff eine Spezies umfasst, die aus einem Metallkomplex, einer metallorganischen Spezies und einem organischen Kation ausgewählt ist.

8. Dotiertes Partikel nach Anspruch 7, wobei der Metallkomplex das Metall und einen oder mehrere Liganden umfasst, die optional Aryl- oder Heteroarylgruppen enthalten, wobei der Metallkomplex optional eine kationische Spezies der Formel $[M(L)_n]^{m+}$ umfasst, wobei M ein Metall ist, L ein Ligand ist, der optional eine Spezies ist, die einen oder mehrere Heterozyklen umfasst, und n eine ganze Zahl von 1 bis 6 ist, m eine ganze Zahl und mindestens 1 ist, wobei M aus der Gruppe 8 oder 9 des Periodensystems ausgewählt sein kann, wobei M optional Co oder Ru ist und wobei optional der eine oder die mehreren Heterocyclen ein Heterocyclus ausgewählt aus Pyridin und Pyrrol sind und wobei optional der Heterocyclus ein Polyheterocyclus ist.

9. Dotiertes Partikel nach Anspruch 7, wobei das organische Kation ein Heteroarylkation, optional ein polyheterocyclisches Kation, ist.

10. Dotiertes Partikel nach einem der Ansprüche 1 bis 7 und 9, wobei der Dotierstoff ein Heteroarylkation und ein oder mehrere Gegenionen umfasst; oder

wobei die molekulare kationische Spezies 1,1'-Dimethyl-4,4'-bipyridinium ist; oder
wobei der Dotierstoff 1,1'-Dimethyl-4,4'-bipyridiniumdichlorid umfasst.

11. Verfahren zum Herstellen von Partikeln, wobei das Verfahren Folgendes umfasst:

a. Bereitstellen einer Lösung eines Polymers, das aus einem perfluorierten Monomer und einem Monomer, das eine Sulfonatgruppe aufweist, gebildet ist ("das Polymer"), in einer ersten Flüssigkeit;
b. Inkontaktbringen der Lösung des Polymers in der ersten Flüssigkeit mit einer zweiten Flüssigkeit, wobei die Löslichkeit des Polymers in der zweiten Flüssigkeit geringer als die Löslichkeit des Polymers in der ersten Flüssigkeit ist, sodass Partikel, die das Polymer umfassen, ausfallen.

12. Verfahren nach Anspruch 11, wobei die Lösung des Polymers in einer ersten Flüssigkeit ferner einen Dotierstoff umfasst, der in der ersten Flüssigkeit gelöst oder suspendiert ist, sodass in Schritt (b) die Partikel, die das Polymer und den Dotierstoff umfassen, ausfallen; oder
wobei der Dotierstoff eine molekulare kationische Spezies umfasst.

13. Substrat, auf dem oder in dem sich die dotierten Partikel nach einem der Ansprüche 1 bis 10 befinden, und wobei optional das Substrat ferner ein elektrisch leitfähiges Material umfasst, auf dem oder in dem sich die dotierten Partikel befinden.

14. Elektrode, in der oder auf der sich die dotierten Partikel nach einem der Ansprüche 1 bis 10 befinden.

15. Verwendung der dotierten Partikel nach einem der Ansprüche 1 bis 10 als Katalysator in einer Reaktion, als Elektrokatalysator in einer elektrochemischen Reaktion, in einem elektrochemischen Sensor oder in einer Brennstoffzelle, einer Batterie und einer Solarzelle.

**Revendications**

1. Particule dopée, dans laquelle la particule comprend un polymère formé à partir d'un monomère perfluoré et d'un monomère présentant un groupe sulfonate (« le polymère »), dans laquelle un dopant comprenant une espèce cationique moléculaire est disposé à l'intérieur du polymère ;

dans laquelle le dopant est dispersé dans tout le polymère ; et dans laquelle au moins 50 % des particules, en nombre, ont un rapport de forme, tel que mesuré par microscopie électronique à balayage, inférieur ou égal à 1,5, la microscopie électronique à balayage étant réalisée comme décrit dans la description.

2. Particule dopée selon la revendication 1, dans laquelle le dopant est incorporé dans le polymère.

3. Particule dopée selon l'une quelconque des revendications précédentes, dans laquelle la particule dopée peut être formée par un procédé comprenant

a. la fourniture d'une solution d'un polymère formé d'un monomère perfluoré et d'un monomère présentant un groupe sulfonate (« le polymère ») dans un premier liquide, la solution dans laquelle le dopant est en suspension ou dissous ;
b. la mise en contact de la solution du polymère dans le premier liquide avec un second liquide, dans laquelle la solubilité du polymère dans le second liquide est inférieure à la solubilité du polymère dans le premier liquide, de sorte que des particules comprenant le polymère et le dopant précipitent.

4. Particule dopée selon l'une quelconque des revendications précédentes, dans laquelle la particule a un diamètre inférieur à 100 $\mu$m ; et/ou

dans laquelle la particule a un diamètre de 0,1 $\mu$m à 10 $\mu$m ; ou de 0,1 $\mu$m à 5 $\mu$m ; et/ou
de forme sensiblement sphérique et/ou présentant un rapport de forme de 1,5 à 1.

5. Particule dopée selon l'une quelconque des revendications précédentes, dans laquelle le dopant est choisi parmi une espèce électroactive, une espèce catalytique, un médicament et un agent de diagnostic ; et/ou
dans laquelle le dopant est une espèce électrocatalytique.

6. Particule dopée selon l'une quelconque des revendications précédentes, dans laquelle le dopant présente deux états d'oxydation : un état oxydé et un état réduit, et le potentiel standard d'électrode pour réduire l'état oxydé à l'état réduit est de -2 V à 2 V, vs SCE.

7. Particule dopée selon l'une quelconque des revendications précédentes, dans laquelle le dopant comprend une espèce choisie parmi un complexe métallique, une espèce organométallique et un cation organique.

8. Particule dopée selon la revendication 7, dans laquelle le complexe métallique comprend le métal et un ou plusieurs ligands, contenant éventuellement des groupes aryle ou hétéroaryle, éventuellement dans laquelle le complexe métallique comprend une espèce cationique de formule $[M(L)_n]^{m+}$, dans laquelle M est un métal, L est un ligand, qui est éventuellement une espèce comprenant un ou plusieurs hétérocycles, et n est un entier de 1 à 6, m est un entier et au moins 1, dans laquelle M peut être choisi dans le groupe 8 ou 9 du tableau périodique, éventuellement dans laquelle M est Co ou Ru et éventuellement dans laquelle les un ou plusieurs hétérocycles sont choisis parmi la pyridine et le pyrrole et éventuellement dans laquelle l'hétérocycle est un polyhétérocycle.

9. Particule dopée selon la revendication 7, dans laquelle le cation organique est un cation hétéroaryle, éventuellement un cation polyhétérocyclique.

10. Particule dopée selon l'une quelconque des revendications 1 à 7 et 9, dans laquelle le dopant comprend un cation hétéroaryle et un ou plusieurs contre-ions ; ou

dans laquelle l'espèce cationique moléculaire est le 1,1'-diméthyl-4,4'-bipyridinium ; ou
dans laquelle le dopant comprend du dichlorure de 1,1'-diméthyl-4,4'-bipyridinium.

11. Procédé de fabrication de particules, le procédé comprenant :

a. la fourniture d'une solution d'un polymère formé à partir d'un monomère perfluoré et d'un monomère présentant un groupe sulfonate (« le polymère ») dans un premier liquide ;
b. la mise en contact de la solution du polymère dans le premier liquide avec un second liquide, dans lequel la solubilité du polymère dans le second liquide est inférieure à la solubilité du polymère dans le premier liquide, de sorte que des particules comprenant le polymère précipitent.

12. Procédé selon la revendication 11, dans lequel la solution du polymère dans un premier liquide comprend en outre un dopant, qui est dissous ou en suspension dans le premier liquide, de sorte que, à l'étape (b), les particules comprenant le polymère et le dopant précipitent ; ou
dans lequel le dopant comprend une espèce cationique moléculaire.

13. Substrat sur lequel ou dans lequel sont disposées les particules dopées selon l'une quelconque des revendications 1 à 10, et éventuellement,
dans lequel le substrat comprend en outre un matériau électriquement conducteur dans lequel ou sur lequel se trouvent les particules dopées.

14. Électrode dans laquelle ou sur laquelle sont disposées les particules dopées selon l'une quelconque des revendications 1 à 10.

15. Utilisation des particules dopées selon l'une quelconque des revendications 1 à 10 comme catalyseur dans une réaction, comme électrocatalyseur dans une réaction électrochimique, dans un capteur électrochimique, ou dans une pile à combustible, une batterie et une pile solaire.

FIG. 1(a)

FIG. 1(b)

FIG. 1(c)

FIG. 1(d)

FIG. 2

FIG. 3

FIG. 4

FIG. 5

*FIG. 6(a)*

*FIG. 6(b)*

*FIG. 6(c)*

FIG. 7(a)

FIG. 7(b)

FIG. 7(c)

FIG. 7(d)

**FIG. 7(e)**

**FIG. 7(f)**

FIG. 8

FIG. 9

FIG. 10

FIG. 11

FIG. 12(a)

FIG. 12(b)

$$C_2O_4{}^{2-} \qquad\qquad C_2O_4{}^{-\bullet} \;\rightleftarrows\; CO_2{}^{-\bullet} + CO_2$$

or                          or

$$CO_2{}^{-\bullet} \qquad\qquad CO_2$$

$-\, e^-$

$+\, e^-$

RU(II)-
Nafion

RU(III)-
Nafion

$-\, e^-$

Carbon Microwire Electrode

## FIG. 13

FIG. 14(a)

FIG. 14(b)

FIG. 14(c)

FIG. 14(d)

FIG. 14(e)

FIG. 14(f)

*FIG. 15*

*FIG. 16*

*FIG. 17*

FIG. 18(a)

FIG. 18(b)

FIG. 19

FIG. 20

FIG. 21(a)

$$ip = 22.18\, v^{1/2} + 0.43$$
$$R^2 = 0.9980$$

FIG. 21(b)

FIG. 22(a)

FIG. 22(b)

FIG. 23

FIG. 24

*FIG. 25*

FIG. 26(a)

FIG. 26(b)